# EUROPÄISCHE PATENTSCHRIFT

(11) **EP 2 820 687 B1**
(45) Veröffentlichungstag und Bekanntmachung des Hinweises auf die Patenterteilung: **02.05.2018**
(21) Anmeldenummer: 13707378.9
(22) Anmeldetag: 01.03.2013
(51) Int. Cl.: H02J 7/00, H01M 10/42, H01M 2/10, H01M 10/46, H01M 10/48, B60L 11/18

(54) **VERSORGUNGSNETZKOMPONENTE FÜR EIN VERSORGUNGSNETZ**
SUPPLY NETWORK COMPONENT FOR A SUPPLY NETWORK
COMPOSANTS D'UN RÉSEAU D'ALIMENTATION

(30) Priorität: 02.03.2012 DE 102012101800
(43) Veröffentlichungstag der Anmeldung: 07.01.2015
(73) Patentinhaber: Unicorn Energy GmbH, 73525 Schwäbisch Gmünd (DE)
(72) Erfinder: DOERNDORFER, Johannes, 73525 Schwaebisch Gmuend (DE)
(74) Vertreter: Glawe, Delfs, Moll
(86) Internationale Anmeldenummer: PCT/EP2013/054194
(87) Internationale Veröffentlichungsnummer: WO 2013/128009

(56) Entgegenhaltungen:
- EP-A2- 2 495 802
- WO-A1-2008/035873
- WO-A2-2007/134320
- US-A1- 2007 188 130

## Beschreibung

Die vorliegende Erfindung betrifft eine Versorgungsnetzkomponente für ein Versorgungsnetz für ein Netzmedium. Insbesondere betrifft die vorliegende Erfindung eine Energieversorgungsnetz für die Versorgung mehrer Verbraucher mit elektrischer Energie. Insbesondere kann es sich dabei bei der Versorgungsnetzkomponente um einen Energiespeicher, einen Energiewandler bzw. eine Energiequelle oder aber um einen Energieverbraucher handeln.

Derartige Versorgungsnetzkomponenten sind allgemein bekannt.

Akkumulatoren als Energiespeicher und als Energiequellen in Spannungsnetzen zur Versorgung von Verbrauchern mit elektrischer Energie sind allgemein bekannt. Als Energiespeicher üblich sind beispielsweise Alkalibatterien sind in genormten Gehäusegrößen wie etwa Micro(AAA), Mignon(AA), Baby(C), Mono (D), die jeweils eine Spannung von 1.5 Volt bereitstellen oder aber Blockbatterien mit einer Spannung von 9 Volt oder Flachbatterien mit einer Spannung von 4,5 Volt. Ebenfalls existieren wieder aufladbare Varianten dieser Energiespeicher auf Basis von Nickel/Cadmium (NiCd) oder Nickel/Metallhybrid (NiMh) oder auf Basis von Lithium.

Derartige Batterien lassen sich durch Reihenschaltung dann hinsichtlich der Betriebsspannung an eine bestimmte Anwendung anpassen. Auch bei bekannten Auto- und Motorradbatterien, gibt es für die jeweiligen Anschlüsse und Bauformen einige standardisierte Formen, die es einem Benutzer erlauben, zwischen unterschiedlichen Herstellern und Qualitäten auszuwählen. Diese Batterien erlauben es auch, dass der Benutzer bzw. der Fachmann selbst einen Batteriewechsel vornimmt. Ein Konstrukteur und Entwickler kann bei diesen Batterien auf einen weltweiten Standard aufbauen, welcher eine Serviceversorgung rund um den Globus erlaubt. Für zylindrische wieder aufladbare Zellen gibt es eine große Auswahl von Ladegeräten, Ladestationen und Anwendungen.

Bei wieder aufladbaren Lithium-Batterien ist dies jedoch nicht der Fall. In den meisten Fällen müssen die Batterien speziell auf die Anwendung und auf das Ladesystem angepasst werden. Aufgrund der erhöhten Sicherheitsanforderungen und dem Gefährdungspotential des Benutzers im Brandfall ist dieser Batterietyp nicht mehr einfach und unkompliziert zu handhaben. Eine Parallel- und/oder Reihenschaltung ohne aufwendige Kontrollen ist nicht möglich. Häufig müssen von einem Hersteller vorgegebene Grenzwerte beachtet werden. Jegliche Überlastung kann zum Ausfall einer Zelle oder sogar zu unkontrollierten Bränden führen. Somit ist es heute üblich, für jede Anwendung ein eigenes angepasstes Batteriesystem mit einem angepassten Ladesystem zu entwerfen und zu bauen.

Die Anforderungen an die Qualität einer einzelnen Batterie erhöht sich bei größeren Batterieanordnungen und entsprechend hohen Batteriespannungen, da bei einer seriellen Verschaltung von Batterien bzw. Zellen jede einzelne Zelle funktionsfähig sein muss. Kann eine Zelle keinen Strom mehr transportieren, ist voll beladen bzw. entladen, muss sich die gesamte Anordnung abschalten. Eine solche Batterieanordnung definiert sich also immer aus der schwächsten und stärksten Zelle. Damit sind die Qualitätsanforderungen an die einzelnen Zellen extrem hoch. Die Batterielebensdauer soll entsprechend lang sein. Bei Laptops und mobilen Telefonen erwartet man als Lebensdauer des Gerätes zwei Jahre. Dann gilt eine Technik in der Regel als veraltet. Dies bedeutet einen überschaubaren Lebenszyklus für die verwendete Batterie bzw. Zelle. Auch ist der Wertanteil der Batterie nicht dominant, ist ihr Ausfall und die Ersatzteilbeschaffung unkritisch. Gleiches gilt für Bleibatterien in Motorrädern und Automobilen. Hier ist man das mehrfache Austauschen während der Lebenszeit gewohnt. Bei der Autobatterie handelt es sich statistisch um die häufigste Panne im PKW und Motorradbereich. Ähnliche Ansätze für die Lebensdauer sind für die elektrische Mobilität nicht akzeptabel.

Bei jedem Zellenpack ist es notwendig, jede einzelne Zelle in gleichem Ladezustand zu halten. Dies wird bei Blei, NiCd und NiMh durch eine Überladung der Batterie erzeugt was eine Erhitzung der vollen Zellen zur Folge hat, aber in Grenzen möglich ist. Dies ist bei Lithium-Ionen-Zellen nicht erlaubt, bzw. manche Zellenarten werden, sobald sie voll geladen sind, hochohmig und nehmen keinen Strom mehr auf. Daher ist es wichtig durch zusätzliche Schaltungen die Zellen untereinander anzugleichen. Um einen harmonisch zusammenarbeitenden Zellenpack zu bekommen findet beim Herstellungsprozess meist eine Überprüfung und Sortierung jeder einzelnen Zelle statt, um nur gleichartige Zellen in einem Zellenpack zu verwenden. Damit eine gleichförmige Alterung in einem Pack entsteht ist es wichtig alle Zellen auf gleichem Temperaturniveau zu halten was bei großen Anordnungen, oder verteilten Batterien in einem Fahrzeug schwer zu erreichen ist.

Üblicherweise können innerhalb eines Zellenpacks bei einzelnen defekten Zellen diese mechanisch nur schwer oder gar nicht gewechselt werden. Weiterhin zeigt es sich meist, dass wenn alte und neue Zellen in Reihe geschaltet werden, der Pack nur kurzzeitig homogen reagiert. Dadurch ist eine Reparatur durch Wechseln einzelner defekter Zellen von zusammenhängenden Packs nicht empfehlenswert und wird so auch nicht praktiziert.

Speziell für mobile Anwendungen und Fahrzeuge ist es interessant, über die chemische Zusammensetzung und den inneren Aufbau der Batterie den Anforderungen des Benutzers gerecht zu werden. Preis, Dauer- und Spitzenleistung, Energieinhalt, Sicherheit, Ladezeit, Lebensdauer und Einsatztemperatur lassen sich durch die chemische Zusammensetzung oder Veränderung der festgesetzten Grenzwerte verschieben.

Bei elektrischen Fahrrädern gibt es inzwischen viele Kombinationen von Ladegeräten und Batterien die nur als geschlossene Einheit funktionieren. Hierbei wird eine Gleichstromverbindung oftmals als Steckverbinder verwendet. Dabei ist nicht zu verhindern, dass Ladegeräte für z.B. 36-Volt-Batterien an 24-Volt-Batterien angeschlossen werden.

Das Ende der Lebenszeit einer Batterie wird heute derart definiert, dass es erreicht ist sobald die Batterie nur noch eine Restkapazität von etwa 70-80 % von Ihrer ursprünglichen Kapazität aufweist. Die mögliche Lade- und Entladekapazität einer Batterie nimmt hierbei mit zunehmender Anzahl der Zyklen linear ab. Somit kann es vorkommen, dass eine Batterie mit einer Restkapazität von 80 % zu entsorgen ist. Die sekundäre Weiterverwendung dieser Batterien ist wünschenswert.

Der Anteil der Batteriekosten ist bei elektrischen Fahrzeugen unverhältnismäßig hoch. Daher wäre es wünschenswert, nur die Speichergröße zu haben die tatsächlich benötigt wird. Auch eine Betankung oder ein Schnelles wechseln der Batterien ist ein wünschenswertes Kriterium. Speziell bei PKWs und Bussen gibt es Modelle, die ein komplettes Wechseln des Batterieblocks ermöglichen. Die Bildung eines Standards ist aber durch die unterschiedliche Batteriegeometrien und die unterschiedlichen Größen ein schlecht realisierbares Unterfangen.

Der sogenannte "EnergyBus"-Standard auf Grundlage des Standards von CANopen (Controller Area Network) bildet die Grundlage für die Steuerung und Kommunikation von intelligenten Stromnetzkomponenten in der mobilen Anwendung. Eine Lastregelung wird auf mehrere Busteilnehmer verteilt und es ist zwingend ein eindeutiger Master für das Energiemanagement zu definieren. Die Anzahl der Batterien ist hier begrenzt. Die Datenverbindung ist busförmig als CAN Bus angelegt. Das Routing des Stroms ist nicht eindeutig nachvollziehbar.

Eine Kombination von Batterien unterschiedlicher Kapazität wird beschrieben in der Druckschrift WO 2012 009281 A1. Die Druckschrift WO 2012 008244 A1 zeigt eine Nutzung zweier parallel geschalteter Akkumulatoren. Des Weiteren zeigt die Druckschrift WO 2011 163306 A2 eine Möglichkeiten zur Balancierung von großen Elektrofahrzeugbatterien. Die Druckschrift EP 2 343 752 A3 zeigt eine Batterie mit zylindrischer Gehäuseform. Die Druckschrift WO 2011 121755 A1 zeigt die Möglichkeit des Einsatzes von gebrauchten Akkumulatorzellen durch Ausmessung und Zusammenstellung von neuen passenden Zellenpaarungen. Die Druckschrift WO 2011 060096 A3 schlägt eine automatische Parallelisierung von Batteriepacks vor. Die Druckschrift DE 10 2008 050437 A1 zeigt eine skalierbare Autobatterie. Die Druckschrift DE 10 2006 055883 B4 zeigt ein Baukastensystem für Energiewandler und Energiespeicher. Die Druckschrift DE 19615943 A1 zeigt ein Solarsystem, das aus Normteilen zusammengesetzt ist. Die Druckschrift DE 10 2010 027854 A1 zeigt ein wechselseitiges Laden und Entladen von Akkumulatoren. Die Druckschrift DE10 2010 023049 A1 zeigt ein Baukastensystem für Batterien für optimierte Wartungsaufgaben. Die Druckschrift US 2011 0163603 A1 zeigt eine hybride, zentral gesteuerte Energieversorgung. Die Druckschrift DE 10 2006 043831 A1 zeigt ein Batteriesystem aus Teilbatterien, die über bidirektionale Gleichstromwandler verbunden sind. Die Druckschrift DE 10 2006 047654 A1 zeigt eine automatische Batteriewechselstation für PKWs.

Bei den heutigen großen mehrzelligen Batteriesystemen bestehen mehrere grundlegende Probleme. Durch eine hohe Anzahl von Zellen steigt die Wahrscheinlichkeit eines Ausfalls linear mit der Anzahl in Reihe geschalteter Zellen. In den meisten Fällen eines Zellendefekts muss die gesamte Batterieeinheit getauscht werden, was hohe Kosten zur Folge hat.

Bei den Batteriekonzepten wie sie derzeit bei PKWs verwendet werden entsteht eine hohe Betriebsspannung die durch passende Isolationsüberwachungen auch bei einem Unfall entsprechend gesichert werden muss. Reparaturen an Batterien sind meist auch für die Fachwerkstatt nicht möglich. Meist muss der Kunde eine Lieferbeziehung für den Energiespeicher mit dem Applikationshersteller eingehen und kann nicht auf eine zweite Alternative ausweichen. Dadurch kann kein Wettbewerb entstehen. Speziell bei Lithium entsteht zu jedem Produkt bzw. Fahrzeug ein eigenständiges Batteriedesign das sich nicht ohne weiteres skalieren und auf andere Anwendungen übertragen lässt. Die Entwicklungszeit und Prüfungen müssen bei Designänderungen oft nochmals durchgeführt werden. Batterietauschstationen können nur für einzelne Fahrzeug- und Batterietypen passend entstehen.

Das potentielle Gefahrenrisiko steigt mit der Größe des Batteriepacks. Lithium Batterien gelten immer als Gefahrgut. Im Augenblick gibt es in Deutschland drei Grenzen. Alles unter 100 Wh ist problemlos auch im Flugzeug transportabel. Lithium Batterien inkl. Verpackung die mehr als 5kg wiegen, dürfen nicht gemeinsam mit Personen im Flieger transportiert werden. Batterien über 35 kg können nicht als Luftfracht transportiert werden.

Bei den meisten Anwendungen bilden das Ladegerät und die Batterie eine unzertrennliche Kombination. Das heißt, dass die Grenzwerte für die Ladung und deren Regelung vom Ladegerät erfolgt. Entsteht hier eine Verwechslung zwischen dieser Paarung kommt es bei einer unkontrollierten Überladung häufig zu Bränden die aufgrund des Lithiums schwer zu löschen sind.

Die notwendige mechanische Stabilität eines Batteriepacks nimmt mit wachsender Größe entsprechend zu und ist in Unfallsituationen nicht einfach zu beherrschen.

Bei einer Anwendung mit fest installierten Batterien kann es zwischen Herstellung des Geräts und der Erstbenutzung beim Kunden ein Zeitraum von bis zu drei Jahren vergehen. Bei den meisten Batteriesystemen bedeutet dies das Aus durch Tiefentladung. Somit muss regelmäßig während der Lagerung eine Ladung erfolgen. Es wäre daher vorteilhaft wenn die Anwendung und die Batterien getrennt gelagert und geliefert werden, um die Lagerzeit der Batterien kontrollieren zu können.

Eine große Anzahl von Herstellern, die sich mit der Produktion von Lithiumzellen beschäftigen und diese konfektionieren, sowie Benutzer und Transportunternehmen sind der ständigen Gefahr eines Brandes ausgesetzt. Auch Fahrzeughersteller, Lager, Garagen, Fähren, Schiffe und Flugzeuge sind hierbei in der Vergangenheit beschädigt oder zerstört worden. Als extrem gefährlich stellen sich hierbei Batteriepacks heraus, die eine mechanische Beschädigung aufweisen. Bei Lithiumzellen kann es hierbei auch noch nach Wochen zu einem plötzlichen Ausbruch eines Feuers kommen. Besonders kleinste Kurzschlüsse innerhalb einzelner Zellen durch während der Produktion entstandene Verunreinigungen lösen hier auch noch nach Jahren der Benutzung Brände aus. Bei notwendigen Rückrufaktionen ist es oft nicht nachvollziehbar wohin die einzelnen Batterien gegangen sind.

Große Batteriepacks sind heute nur mit homogen gleichen ausgemessenen Einzelzellen aufzubauen. Die Qualitätsansprüche für die einzelne Zelle und ein homogene Temperaturverteilung im Pack ist Grundlage für einen langlebigen Betrieb. Lösungen für den Austausch einzelner Zellen oder von Teilbereichen sind nicht vorhanden.

Die US 2007/0188130 A1 offenbart ein Energiespeichersystem, bei dem eine Vielzahl von handelsüblichen Akkumulatoren (beispielsweise von Powertools, wie Akku-Bohrmaschinen) regalartig in einen Schaltschrank aufgenommen ist. Die Akkumulatoren sind über eine im Schaltschrank angeordnete Hauptplatine elektrisch miteinander verbunden. Die Akkumulatoren sind vorzugsweise sämtlich vom identischen Typ (zum Beispiel 18 V Akkumulatoren von Makita). Die EP 2 495 802 A2 (die ein nachveröffentlichtes Dokument gemäß Art. 54 (3) EPÜ darstellt) offenbart ein hierarchisch aufgebautes Batteriesystem. Das Batteriesystem umfasst Batterieblöcke und Batteriepacks. Es ist eine Einrichtung zum Begrenzen von Einschaltströmen vorgesehen.

Erfindungsgemäß werden eine Energiespeicherkomponente für ein Versorgungsnetz mit den Merkmalen des Anspruchs 1 sowie ein Energiespeicherblock mit den Merkmalen des Anspruchs 10 vorgeschlagen.

Auf diese Weise wird es möglich, eine mobile, stapelbare, sichere und intelligente Energiespeicherkomponente als Versorgungsnetzkomponente eines intelligenten Stromnetzes oder Energiemesh bereitzustellen, in dem die Energieverbraucher, die Energiequellen und die Energiespeicher als erfindungsgemäße Versorgungsnetzkomponenten über geeignete Schnittstellen und Protokolle kommunizieren und der Stromfluss und Datenfluss zwischen den Versorgungsnetzkomponenten eindeutig geroutet werden kann. Des Weiteren ist jeweils eine eigenverantwortliche und eigenständige Lastregelung möglich. Ein parallel zudem Netzmedium errichtetes Daten und Informationsnetz kann insbesondere gemeinsam über gleiche Kontakteinheiten kommunizieren.

Die typische Größe einer solchen Versorgungsnetzkomponente als Standardenergiespeichers basierend auf Lithium kann sinnvoll auf die voranstehend erläuterten Transport- und Gefahrgutregeln und auf die Regeln für berührbare Kleinspannung angepasst werden. Dadurch ergeben sich zwei sinnvolle Packmaße. Zum einen ein Packmaß von 100 Wh und einem Gewicht von weniger als 1 kg und zum anderen mit einem Gewicht von bis zu 5 kg mit Umverpackung.

Die Betriebsspannung sollte sich innerhalb der Kleinspannung von 48 V Batterie-Nennspannung und einer Spitzenspannung von 60 V bewegen. Da bei gleicher Leistung mit hoher Spannung der Strom entsprechend sinkt, sollte die Spannung der Energieübertragung möglichst hoch gewählt werden.

Die eingesetzten Funktionseinheiten des Versorgungsnetzkomponente sollten wiederum möglichst einer bekannten Baugröße der Zellenhersteller entsprechen. Hier ist der zylindrische Typ 18650 mit einem Durchmesser von 18 mm bei einer Länge von 65 mm ein verbreitetes Standardmaß. Eine Zelle vom Typ 18650 hat in etwa 7 bis 8 Wh. Ein Energiespeicher hätte bei 12 Zellen und einem Zellengewicht von ca. 500-800 g eine Gesamtkapazität von etwa 84 bis 96 Wh. Denkbar ist alternativ auch eine Einzelzellenlösung mit 3.6 V und 27 Ah und mit einem Gleichstromwandler, der dann die 3,6 V auf 48 V wandelt.

Ähnlich den standardisierten Alkalibatterien, den Mobilen Daten- und Handynetzen ermöglicht eine mobile, steckbare Einheitsform der Versorgungsnetzkomponente eine Entzerrung zwischen Energielieferant, Gerätehersteller, Anwendungen, Besitzer, Netzbetreiber und Benutzer was hier einen vorteilhaften Wettbewerb mit hohen Stückzahlen entstehen lässt. Die Skalierbarkeit ermöglicht es Batteriesysteme von 100 Wh bis in Bereiche mit mehreren Megawattstunden mit gleichen Speicherelementen zu ermöglichen.

Die Versorgungsnetzkomponente als Energiespeicher ist beliebig zwischen unterschiedlichen Anwendungen austauschbar. Zu Hause oder in Firmen können variable Zwischenspeicher in Verbindung mit anderen Versorgungsnetzkomponenten in Form von Energiequellen wie Solaranlagen und andere Stromquellen entstehen, die dann jeweils auch für die Fahrzeugflotte durch einen Austauschvorgang eingesetzt werden können. Die einzelnen Energiespeicher dürfen und können beliebig in der Anwendung verteilt werden und ein gemeinsames intelligentes Stromnetz bilden. Durch eine Baumstruktur können verschiedene Blöcke gebildet werden die problemlos in übergeordnete Strukturen eingebunden werden können. Für Firmen und Flottenbetreiber kann es einen durchgängigen "Standard Akku" für unterbrechungsfreie Stromversorgung, elektrische Traktionsanwendungen, Notbeleuchtung, Fahrzeugflotte, Rollstühle, mobile Gartengeräte und kabellose Handwerkzeuge geben.

Große Mengen an Energiespeichern wie zum Beispiel an Tauschstationen können bei geringer Netzlast Energie speichern / aufladen und bei Spitzenlast einen Teil davon wieder einzuspeisen und damit als Speicherkraftwerke eingesetzt zu werden.

Aber auch im Heimgebrauch ist es denkbar den Speicher für andere Anwendungen zu verwenden bzw. mobile Energie zu haben. Mit einem Gleichstrom/Wechselstrom-Wandler kann man jedes strombetriebene Gerät zu einem kabellosen Gerät als Versorgungsnetzkomponente machen. Darunter sind zum Beispiel Staubsauger Handwerksgeräte, Mixer, Rührgeräte, Musikanlagen, Verstärker, elektronische Instrumente, Messgeräte, Kaffeemaschine, Wasserkocher, Bügeleisen und Computer.

Ein weiteres großes Anwendungsgebiet sind Camping- und Bootsausstattungen. Hier kann über Solaranlagen und Windräder als Versorgungsnetzkomponenten Energie gesammelt werden und direkt in das Stromnetz eingespeist werden.

Einsatzfahrzeuge bei Rettungsdiensten, Polizei und Militär sind immer mehr abhängig von mobilem Strom und verwenden viele akkubetriebene Hilfsmittel die über ein einheitliches anwendungsabhängig skalierbares Akkusystem flexibler und systematisierter einsetzbar werden. Mobiler Strom im Straßenbau zur optischen Warnung mit Blitzleuchten oder mobile Ampelanlagen könnten hier auch auf einen einheitlichen Energiespeicher zurückgreifen. Die Gehäuse der intelligenten Standardenergiespeicher sind auch mit anderen Energiespeichern und Akkusystemen bestückbar und daher zukunftssicher. Es entstehen trennbare Verpackungsgrößen die ungefährlich auch im Flugverkehrtransportierbar sind. Ein großer Energiespeicher besteht nur noch aus kleinen Einheiten die gefahrlos berührt, gewartet und in Betrieb genommen werden können. Bei Unfällen bzw. Isolationsschäden ist das Entstehen von gefährlicher Hochspannung nahezu ausgeschlossen. Die Reparatur eines Energiespeichers durch den Benutzer bzw. eine Fachwerkstatt wird problemlos möglich. Die Größe, Struktur und das Gewicht ermöglichen es die Gehäuse als stabile Einheiten zu konstruieren.

Jegliche mechanische Bewegung kann mit elektromagnetischen Wandlern / Generatoren ohne viel Aufwand zum Energiesammler im Zusammenhang mit der Batterie kombiniert werden. Kleine Windräder, Wasserräder mit entsprechenden Generatoren können in einfacher Weise genutzt werden um Energie aus der Umwelt einfach lokal am Generator zu sammeln und zu speichern.

Batteriebetriebene Geräte können durch die Einheitsform auch ohne Batterie und Ladesystem dem Kunden angeboten und verkauft werden. Das Anfüllen des Turms einer Windkraftanlage mit mit mehreren Versorgungsnetzkomponenten bestückten Containern erlaubt es, diese Speicher dann auf Größen im Bereich von MWh zu realisieren und sie gleichzeitig als Tauschstation zu betreiben.

Die voranstehend benannte Aufgabe wird somit vollkommen gelöst.

In einer Ausführungsform der Versorgungsnetzkomponente kann vorgesehen sein, dass die Kopplungseinheit eine Regelungseinrichtung zum Regeln der Funktionsgruppe aufweist.

Eine solche Regelungseinrichtung kann in dem Fall, dass es sich bei der einer oder mehrer der Funktionseinheiten der Funktionsgruppe um einen Energiespeicher handelt, beispielsweise als Energiemanager fungieren und bestimmte Lade- und Entladestrategien ausführen.

Als Lade- bzw. Entladestrategie für parallel geschaltete Funktionseinheiten, die als Energiespeicher ausgebildet sind, stehen beispielsweise zwei Verfahren zur Auswahl.

Zum ersten kann bei einer Ladung und Entladung zwischen den einzelnen Funktionseinheiten hin- und hergeschaltet werden. Hierdurch kann die Kapazität erhöht werden, es verringert sich jedoch die abrufbare Leistung.

Zum zweiten kann vorgesehen werden, dass die als Energiespeicher ausgebildeten Funktionseinheiten mit gleicher Spannungslage parallel zusammengeschaltet werden. Diese Angleichung wird erreicht, in dem beim Entladen der Energiespeicher mit der höchsten Spannung eingeschaltet und so weit entladen wird bis er das Spannungsniveau des Energiespeichern mit dem zweithöchsten Spannungsniveau erreicht hat. So werden die Energiespeicher der Reihe nach zugeschaltet bis die interne Packspannung und die Stromnetzspannung gleiches Niveau haben. Beim Laden kann dieser Vorgang genau gegenteilig erfolgen. Sobald sich eine solche Anordnung angeglichen hat und beisammen bleibt, bleibt beim Laden und Entladen die Spannungslage üblicherweise gleich. Diese gemeinsame Ladung und Entladung ist auch mit Packs unterschiedlichen Altersmöglich. Alte Energiespeicher haben meist einen höheren Innenwiderstand. Bei Lastsprüngen wird dann der bessere Energiespeicher höher belastet und der Ältere bzw. schwächere entsprechend geringer. Auf diese Weise können auch grundverschiedene Chemiesorten bei der Entladung kombiniert werden. Kombinationen aus Lithium und NiMh haben sich hier bewährt. Auch Energiespeicher mit unterschiedlichen Kapazitäten lassen hier eine Kombination zu.

Entsprechend kann die Regelungseinrichtung derart ausgebildet sein, dass sie zumindest eines der voranstehend ausgeführten verfahren ausführen kann.

In einer Ausführungsform der Versorgungsnetzkomponente kann vorgesehen sein, dass die mindestens eine Kontakteinheit des Weiteren eine Hilfsspannungsschnittstelle zum Übertragen einer Hilfsspannung zur Versorgung der Kontakteinheit und/oder der Kopplungseinheit mit elektrischer Energie aufweist.

Die Hilfsspannung steht insbesondere Mikrokontrollern in der Versorgungsnetzkomponente zur Verfügung, die eine Kommunikation vor dem Zuschalten der Netzmediums ermöglichen.

In einer Ausführungsform der Versorgungsnetzkomponente kann vorgesehen sein, dass die Transportschnittstelle die elektrische Energie in Form eines Gleichstroms überträgt.

Um eine Lastregelung wie bei einem herkömmlichen Kraftwerksmanagement zu ermöglichen wird vorgeschlagen, im Falle von elektrischer Energie als Netzmedium ein Gleichspannungsnetz zwischen den Versorgungsnetzkomponenten aufzubauen und eine Spannungsregelung im Netz als Lastregelung zu verwenden.

In einer Ausführungsform der Versorgungsnetzkomponente kann vorgesehen sein, dass die Funktionsgruppe zwölf Funktionseinheiten aufweist, die jeweils als Lithiumzelle ausgebildet sind.

Eine homogene Temperaturverteilung und das notwendige Balancieren der Zellen beziehen sich in solchen Systemen dann nur noch auf die z.B. 12 gemeinsamen Zellen innerhalb eines Gehäuses. Auf die Anwendung verteilte Packs dürfen andere Temperaturen haben ohne sich gegenseitig entsprechend zu beeinflussen. Entsprechend können auch große Anordnungen von Packs über eine einfache Belüftung der Anwendung entsprechend klimatisiert werden. Eine Überhitzung kann durch entsprechend optimale Temperierung von Wechselbatterien in den Ladestationen erfolgen.

In einer Ausführungsform der Versorgungsnetzkomponente kann vorgesehen sein, dass die Funktionsgruppe mindestens einen Gleichstromwandler aufweist.

In den in Bezug auf die Regelungseinrichtung erläuterten Lade- bzw. Entladestrategien bestimmt die Batterie die Spannungslage im Stromnetz. Anstelle eines Schalters kann ein Gleichstromwandler (DC/DC-Wandler) in der Versorgungsnetzkomponente vorgesehen sein, der sowohl eine Spannungs-Anhebung als auch Absenkung zwischen den Funktionseinheiten und einer Systemspannung an der mindestens einen Kontakteinheit und dazu ähnlich einem Labornetzteil eine einstellbare Spannungs- und Stromgrenze für beide Stromrichtungen ermöglicht. Dies erlaubt eine exakte Energieverteilung, Regelung und Begrenzung jeder einzelnen Versorgungsnetzkomponente. So wäre es denkbar durch Wechseln von nur 10 % von leeren Versorgungsnetzkomponenten gegen voll geladene Versorgungsnetzkomponenten, einen Energieverbraucher wie zum Beispiel ein Fahrzeug wieder einsatzfähig zu machen.

Durch das integrieren des Gleichstromwandlers kann eine einfache Anpassung erfolgen und auch eine einzelne Versorgungsnetzkomponente auf die Betriebsspannung des Stromnetzes angepasst werden. Etwa im Beispiel der voranstehend beschriebenen Einzellenlösung von 3.6 V auf 48 V. Damit würde das Balancieren zwischen den einzelnen Versorgungsnetzkomponenten entfallen.

Besteht in dem Versorgungsnetz eine Verbindung zwischen einer Versorgungsnetzkomponente als Energiespeicher und einer Vorsorgungsnetzkomponente als Energiequelle bzw. -wandler, bspw. einem Solargenerator, kann der Gleichstromwandler hier die Leistungsoptimierung und das Maximum Power Tracking (MPT) ausführen, d.h. das Regeln desjenigen Stroms und derjenigen Spannung, bei denen die größte Leistungsentnahme aus dem Solargenerator möglich ist. Günstige Kombinationen zwischen unterschiedlichen Solarzellengrößen und Energiespeichern sind einfach ohne aufwendige Verkabelung und großem Installationsaufwand denkbar.

In einer Ausführungsform der Versorgungsnetzkomponente kann vorgesehen sein, dass die Funktionsgruppe eine Mehrzahl von Funktionseinheiten aufweist, die jeweils als Energiespeicher ausgebildet sind, wobei jedem Energiespeicher jeweils ein Gleichstromwandler zugeordnet ist.

Letztlich könnte auf diese Weise das Balancieren zwischen den einzelnen Funktionseinheiten der Funktionsgruppe der Versorgungsnetzkomponente entfallen. Somit ist dann auch auf der Ebene der Funktionseinheiten eine hohe Flexibilität gegeben.

Jede Versorgungsnetzkomponente kann so eigenverantwortlich den Stromfluss durch mindestens einen Schalter in eine oder beide Richtungen unterbrechen.

Jede als Energiespeicher ausgebildete Versorgungsnetzwerkkomponente wird erst Energie liefern wenn über die Kommunikationsschnittstelle eine Freigabe gegeben wird. Hierbei wird nach Authentifizierung, Erkennen von Kompatibilität und Einhaltung der physikalische Grenzen jede Versorgungsnetzwerkkomponente einzeln zu bzw. abgeschaltet.

Jede Versorgungsnetzkomponente kann so über die Kommunikationsschnittstelle und durch eine Kontrolle der Kompatibilität zum vorhandenen Versorgungsnetz das ungefährliche Zuschalten zum Versorgungsnetz verantworten.

In einer Ausführungsform der Versorgungsnetzkomponente kann vorgesehen sein, dass die Versorgungsnetzkomponente mindestens einen Sensor zum Erfassen eines physikalischen Parameters der Funktionsgruppe aufweist, insbesondere wobei der Parameter eine Spannung, ein Strom oder eine Temperatur der mindestens einen Funktionseinheit ist.

Jede Versorgungsnetzkomponente kann so alle sicherheitsrelevanten physikalischen Parameter selbst und sichert dadurch einen Benutzer. Insbesondere sind Spannung, Strom und Temperatur zu überwachen und, insbesondere durch die Regelungseinrichtung, zu limitieren. Über die Kommunikationsschnittstelle können alle notwendigen technischen Daten und physikalischen Parameter auf elektronischem Wege zwischen Versorgungsnetzkomponenten ausgetauscht werden.

Jede Kontakteinheit kann aufgrund der gesammelten Messdaten jedes Teilnehmers beispielsweise den augenblicklich fließenden Strom ermitteln und für Begrenzung sorgen. Zusätzlich ist es denkbar die Temperatur der Kontakteinheit in der Nähe der Kontakte zu messen um somit defekte, verschmutzte oder schlecht verbundene Verbindungen bei den Hochstromsteckern zu ermitteln, diese zu melden und wenn möglich diese Pfade im Strom entsprechend zu reduzieren.

In einer Ausführungsform der Versorgungsnetzkomponente kann vorgesehen sein, dass die Versorgungsnetzkomponente mindestens einen Sensor zum Erfassen einer Umgebungstemperatur der Versorgungsnetzkomponente oder einer Beschleunigung der Versorgungsnetzkomponente aufweist.

Die Versorgungsnetzkomponente kann durch eingebaute Temperatur- und Beschleunigungssensoren vorausschauend Probleme erkennen und signalisieren. Gegebenenfalls kann dann eine Übertragung des Netzmediums über die Transportschnittstelle unterbrochen werden. Insbesondere kann so ein Schocksensor bereitgestellt werden, um das mögliche Auftreten von Beschädigungen zu erkennen.

In einer Ausführungsform der Versorgungsnetzkomponente kann vorgesehen sein, dass die mindestens eine Kontakteinheit mit der Funktionsgruppe mittels mindestens eines Permanentmagneten verbunden ist.

Auf diese Weise kann einfache Verbindung der Kontakteinheiten bereitgestellt werden, die leicht wieder lösbar ist, indem eine Haltekraft des Permanentmagneten überwunden wird. Des Weiteren ist keine besondere Orientierung notwendig, um die Verbindung zu schließen, insbesondere, wenn der Permanentmagnet rotationssymmetrisch in der Kontakteinheit angeordnet ist. Alternativ kann die mindestens eine Kontakt einheit aber auch mit der Funktionsgruppe verschraubt oder auf andere Weise fest verbunden sein. Die vorgeschlagene Verbindung mittels mindestens einem Permanentmagnet kann dann dazu bereitgestellt werden, um die Versorgungsnetzkomponenten bzw, die jeweilige mindestens eine Kontakteinheit zweier Versorgungsnetzkomponenten miteinander zu verbinden.

In einer Ausführungsform der Versorgungsnetzkomponente kann vorgesehen sein, dass die Kommunikationsschnittstelle und/oder die Transportschnittstelle rotationssymmetrisch ausgebildet ist.

Dies ermöglicht eine Verbindung zweier Kontakteinheiten, ohne dass ein Nutzer eine Orientierung der Kontakteinheiten beachten muss.

In einer Ausführungsform der Versorgungsnetzkomponente kann vorgesehen sein, dass die Transportschnittstelle einer der mindestens einen Kontakteinheit unter Verwendung von Federkontaktstiften bereitgestellt ist.

Dies ermöglicht beispielsweise in dem Fall, dass das Netzmedium elektrische Energie ist, eine sichere Übertragung des Netzmediums über die Transportschnittstelle.

In einer Ausführungsform der Versorgungsnetzkomponente kann vorgesehen sein, dass die Transportschnittstelle einer der mindestens einen Kontakteinheit mittels zweier ringförmige, koaxialer Kontakte bereitgestellt ist.

Beispielsweise kann für die Kontakteinheit eine koaxiale Form mit drei Kontakten gewählt werden. Zwei davon sind hochstromfähige, ringförmige Kontakte die bis zu 60 A dauerhaft übertragen können und somit "Plus und Minus" des Versorgungsnetzes mit elektrischer Energie als Netzmedium darstellen.

In einer Ausführungsform der Versorgungsnetzkomponente kann vorgesehen sein, dass die Transportschnittstelle der mindestens einen Kontakteinheit isolierende Stege zwischen einzelnen Kontakten aufweist.

Dies kann dazu beitragen, eine sicher Übertragung über die Transportschnittstelle unter Vermeidung von Kurzschlüssen zu ermöglichen. Insbesondere kann des Weiteren vorgesehen sein, dass die isolierenden Stege sich nach außen über die Kontakte hinausragen. Auf diese Weise kann wirksam ein unbeabsichtigtes Berühren der Kontakte durch einen Nutzer vermieden werden. Dies schließt eine Gefährdung des Nutzers und ein unbeabsichtigtes Überbrücken bzw. Kurzschließen der Kontakte aufgrund der Berührung aus.

In einer Ausführungsform der Versorgungsnetzkomponente kann vorgesehen sein, dass die die Hilfsspannungsschnittstelle koaxial zu der Transportschnittstelle ausgebildet ist.

Ein dritter Kontakt kann als Hilfsspannung dienen. Er steht bei 12 V und bis zu 2 A, um unter anderem den Mikrokontrollern im Netz zur Verfügung zu stehen, die eine Kommunikation vor dem Zuschalten der Netzspannung ermöglichen.

In einer Ausführungsform der Versorgungsnetzkomponente kann vorgesehen sein, dass Kommunikationsschnittstelle eine drahtlose Kommunikationsschnittstelle ist.

Dabei kann in einer Ausführungsform der Versorgungsnetzkomponente vorgesehen sein, dass die Kommunikationsschnittstelle eine RFID - Kommunikationsschnittstelle ist.

Zur Datenübertragung zwischen intelligenten Stromnetzkomponenten wird eine RFID Kommunikation gewählt. Beim Transport, der Sortierung und der Lagerung von Versorgungsnetzkomponenten ermöglicht dies eine Kommunikation und eine Ortung ohne Kontaktierungsvorgänge. Durch die RFID-Technik lassen sich aber auch Daten aus komplett leeren Batterien oder passiven Teilnehmern wie Schlüsselsystemen ohne zusätzliche Batterien entsprechend übertragen wodurch große Mengen an intelligenten Stromnetzteilnehmern übersichtlich verwaltet werden können.

In einer Ausführungsform der Versorgungsnetzkomponente kann vorgesehen sein, dass die Versorgungsnetzkomponente einen zumindest teilweise wiederbeschreibbaren Speicher aufweist.

Jede Versorgungsnetzkomponente kann einen gewissen lesbaren und teilweise schreibbaren Speicherbereich und ermöglicht dadurch eine eindeutige Identifizierung jedes Geräts. So können auf elektronischer Basis alle notwendigen Produktdaten in ein elektronisches Typenschild eingebracht werden.

Über eine zentrale Datenbank können Informationen, wie zum Beispiel Anzahl der Ladezyklen, der technische Zustand oder der aktuelle Benutzer ermittelt und bei jedem Ladevorgang aktualisiert werden. Dadurch sollte es technisch ermöglicht werden diese zurückzurufen wenn sie leistungsbedingt in weniger anspruchsvolle Anwendungen übergehen sollten oder zum Recycling fällig sind. Hier sind dann Miet-, Leih-, Verkaufsmodelle auf Basis einer Online-Wertermittlung des Energiespeichers durchführbar.

In einer Ausführungsform der Versorgungsnetzkomponente kann vorgesehen sein, dass Versorgungsnetzkomponente zumindest ein Teilelement eines Diebstahlsicherungssystems aufweist.

Eine entsprechende Halterung z.B. an einem Fahrrad kann eine Sicherung der Versorgungsnetzkomponente durch eine Verriegelung oder ein Schlosssysteme auf mechanische oder elektromechanische Weise ermöglichen. Auch entsprechende andere Versorgungsnetzkomponente können durch ein solches Schlosssystem geschützt sein.

In einer Ausführungsform der Versorgungsnetzkomponente kann vorgesehen sein, dass die Versorgungsnetzkomponente mindestens eine erste und eine zweite Kontakteinheit aufweist, wobei die erste Kontakteinheit in der Form eines Steckers und die zweite Kontakteinheit in der Form einer Buchse ausgebildet ist.

Es wird eine Kontakteinheit bereitgestellt, die ein schnelles Koppeln und Trennen einzelner Gehäuse untereinander ermöglicht. Im Beispiel wurde hier die zylindrische Form gewählt die vom Design auch an die Symbolik bestehender Batteriestandards erinnern soll. Ähnlich einer zylindrischen Alkalibatterie erfolgt die Kontaktierung durch zwei Kontakteinheiten an zwei Zylinderenden, der Grundfläche und der Deckfläche des Zylinders. Diese zwei Kontaktblöcke können zur Stecksicherung magnetisch oder mechanisch aneinandergepresst werden.

Aus den oben genannten Eckdaten lässt sich eine Bauform für eine Versorgungsnetzkomponente definieren in der dann die Energiespeicher, die Energiequellen und die Energieverbraucher wahlweise durch Stecker und Kabel aber auch durch einfaches Zusammenstecken einzelner Kontakteinheiten untereinander kombiniert werden können. So kann zum Beispiel ein AC/DC-Wandler (Netzteil) mit einer oder mehreren Batterie hintereinander gesteckt werden und eine Ladung kann beginnen.

Im Gehäuse des intelligenten Standardenergiespeichers oder ausgestattet mit den Kontakteinheiten des intelligenten Stromnetzwerks können auch andere Energiespeicher, Energiequellen oder Energieverbraucher installiert werden. So kann in der gleichen Bauform auch ein Netzteil (AC/DC-Wandler) Energie einspeisen oder durch eine Querverbindung mit einem Gleichstromwandler zum 12 V Standard eines Autos hergestellt werden.

Die zwei Kontakteinheiten der als Energiespeicher ausgebildeten Versorgungsnetzkomponente sind mit Stromschienen innerhalb des Gehäuses verbunden, welche gleichzeitig tragende Funktionen übernehmen. Die Konstruktion des Innenaufbaus sollte hierbei so realisiert sein, dass eine hohe automatisierte Fertigung möglich ist und sie die aufgenommen Zellen gegen mechanische Einflüsse von außen möglichst effizient schützt.

In einer Ausführungsform der Versorgungsnetzkomponente kann vorgesehen sein, dass die Versorgungsnetzkomponente eine Identifikationseinheit aufweist, die die Versorgungsnetzkomponente eindeutig kennzeichnet.

Auf diese Weise wird ein eindeutiges Routing des Netzmediums ermöglicht. Des Weiteren ermöglicht dies eine Individualisierung der Versorgungsnetzkomponente, so dass eine Erkennung über ihren gesamten Lebenszyklus möglich ist.

In einer Ausführungsform der Versorgungsnetzkomponente kann vorgesehen sein, dass eine Zuordnung der Versorgungsnetzkomponente zu einer Benutzergruppe in einem Speicher der Versorgungsnetzkomponente abgelegt ist.

Notwendige Informations- und Sicherheitsfunktionen wären dann über RFID zwischen der Tankstation, dem Benutzer und dem Eigentümer der Packs regelbar und mit entsprechenden Serversystemen in zentral abrechenbaren Tauschvorgängen umsetzbar. Hier können Abrechnungsformen wie bei Pfandflaschensystemen bzw. Mobilfunkabrechnungen erfolgen.

Halbautomatische Tauschspeicher können zu Hause den in Wind- oder Solaranlagen geernteten Strom zwischenspeichern und durch einen Akkutausch diese Energie den Fahrzeugen im Haushalt übergeben. Eine entsprechende Ladestation ist dann natürlich einfach auch als Notstromversorgung einsetzbar. Hierbei ist auch die Bündelung in Aufbewahrungssystemen, ähnlich wie bei Pfandflaschensystemen denkbar.

In einer Ausführungsform der Versorgungsnetzkomponente kann vorgesehen sein, dass die Regelungseinrichtung derart ausgebildet ist, dass sie die Funktionsgruppe bei einem Ausfall der Kommunikationsschnittstelle von dem Netzmedium trennt.

Defekte oder nicht geeignete Versorgungsnetzkomponenten werden so vom Versorgungsnetz einfach abgeschaltet. Dadurch kann beispielsweise ein Fahrzeug auch mit einer großen Anzahl von defekten Batterien und Zellen weiterhin einsatzfähig bleiben.

In einer Ausführungsform der Versorgungsnetzkomponente kann vorgesehen sein, dass die Versorgungsnetzkomponente ein Gehäuse mit im Wesentlichen zylindrischer Form aufweist, wobei die Versorgungsnetzkomponente eine erste und eine zweite Kontakteinheit aufweist, wobei die jeweils eine Grundfläche und eine Deckfläche des Zylinders ausbilden.

Die vorgeschlagene zylindrische Form für die Versorgungsnetzkomponente als Energiespeicher lässt mit automatisierten Transportsystemen und Transportrohren eine einfache gemeinsame Füllungs- und Entnahmeöffnung an Fahrzeugen entstehen, die den "Batteriewechsel", ähnlich einem Tankvorgang, in wenigen Minuten ermöglicht.

Für die Verwendung mehrerer Versorgungskomponenten in einem Energieblock sind verschiedene Anwendungsmöglichkeiten denkbar. Dabei können mehrere Versorgungsnetzkomponenten als Energiespeicher natürlich auch zu Energiespeicherblöcken kombiniert werden, deren Bauform nicht zylindrisch ist.

Mit einer als Energiespeicher ausgebildeten Versorgungsnetzkomponente (100Wh) können große Elektrowerkzeuge wie Motorsägen, Rasenmäher, Bohrhämmer, Handkreissägen, usw. betrieben werden. Mit drei derartiger Versorgungsnetzkomponenten (300Wh) kann zum Beispiel ein Elektrofahrrad bewegt werden. Zehn Versorgungsnetzkomponenten könnten ein Zweiradfahrzeug mit einer Geschwindigkeit bis zu 25 km/h antrieben. Mit einhundert als Energiespeicher ausgebildeten Versorgungsnetzkomponente (10kW) könnte schon ein elektrisches Vierradfahrzeug betrieben werden. Auf einer sogenannten Europalette mit Dimensionen von 80x120x100 cm könnte man mit Kontaktierungen und Wandlereinheiten ca. 700 als Energiespeicher ausgebildete Versorgungsnetzkomponenten bzw. 70 kWh unterbringen. In einem Behälter mit den Maßen eines 40-Fuß-Seecontainer könnte man 40 der Europaletten und damit ca. 2800 kWh unterbringen und als Spitzenstromspeicher durch Solaranlagen und Windgeneratoren laden.

Durch eine sinnvolle Kombination von parallel und in Reihe verbundenen Versorgungsnetzkomponenten kann man auf Bauräume, Kosten, Gewicht; Energiekapazität und Leistungsfähigkeit Einfluss nehmen. Durch diese Anordnung ist es aber auch denkbar in einem Fahrzeug einen Stauraum, wie zum Beispiel den Kofferraum oder Sitzplätze wahlweise mit Energiespeichern oder zu befördernder Last zu füllen.

Somit steht es dem Anwender offen vor allem Gewicht, Transportvolumen, Leistung und Energiemenge selbst zu bestimmen und für den jeweiligen Anwendungszweck zu variieren. Jede als Energiespeicher ausgebildete Versorgungsnetzkomponente ermöglicht durch zwei Kontakteinheiten die Erweiterung ohne großen zusätzlichen Aufwand. Natürlich ist auch denkbar, dass man zum Beispiel aus einem Auto als Energiespeicher ausgebildete Versorgungsnetzkomponenten für ein Elektrofahrrad oder den Rasenmäher gefahrlos entnimmt. Zwei bis drei Versorgungsnetzkomponenten können mit entsprechender Anpassung die übliche 12 V Autobatterie bei Verbrennungsfahrzeugen problemlos ersetzen und wenn nötig mit wenigen Handgriffen von einem Laien getauscht werden.

Des Weiteren kann vorgesehen sein, dass die die Versorgungsnetzkomponente oder Elemente der Versorgungsnetzkomponente steuernden und regelnden Elemente, bspw. die Regelungseinrichtung, als wiederbeschreibbare bzw. frei programmierbare Schaltungen ausgebildet sind, die über die Kommunikationsschnittstelle mittels eines Firmwareupdates aktualisiert werden können. Dabei kann das Firmwareupdate beispielsweise von einer entfernt gelegenen weiteren Versorgungsnetzkomponente auf die Versorgungsnetzkomponente geschrieben werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine schematische Ausführungsform einer Versorgungsnetzkomponente,
- Fig. 2: eine weitere Ausführungsform einer als Energiespeicher ausgebildeten Versorgungsnetzkomponente,
- Fig. 3: eine schematische Querschnittsansicht der Versorgungsnetzkomponente in Fig. 2,
- Fig. 4: eine isometrische Explosionsansicht der Versorgungsnetzkomponente in Fig. 2,
- Fig. 5: eine Ansicht der Funktionseinheiten der Versorgungsnetzkomponente in Fig. 2,
- Fig. 6a: eine teilweise zusammengebaute Ansicht der Versorgungsnetzkomponente in Fig. 2,
- Fig. 6b: eine isometrische zusammengebaute Ansicht der Versorgungsnetzkomponente in Fig. 2,
- Fig. 7: eine erste Ausführungsform einer Kontakteinheit, die eine erste Kontakteinheit der Versorgungsnetzkomponente in Fig. 2 bilden kann,
- Fig. 8: eine zweite Ausführungsform einer Kontakteinheit, die eine zweite Kontakteinheit in der Versorgungsnetzkomponente in Fig. 2 bilden kann,
- Fig. 9: eine schematische Ansicht der Ausbildung einer Funktionsgruppe,
- Fig. 10: eine schematische Ansicht eines Versorgungsnetzes mit mehreren Versorgungsnetzkomponenten, und
- Fig. 11: Ausführungsformen eines Energiespeicherblocks.

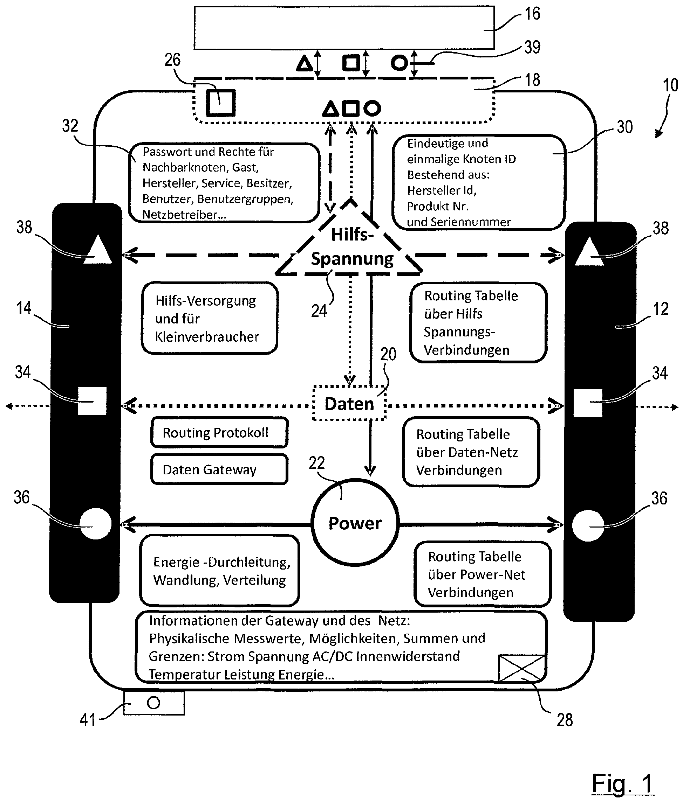

Fig. 1 zeigt eine Versorgungsnetzkomponente 10 in einer schematischen Darstellung. Die Versorgungsnetzkomponente 10 weist eine erste Kontakteinheit 12 und eine zweite Kontakteinheit 14 auf. Mittels der ersten Kontakteinheit 12 und der zweiten Kontakteinheit 14 kann die Versorgungsnetzkomponente 10 mit anderen Versorgungsnetzkomponenten verbunden werden. Die so miteinander verbundenen Versorgungsnetzkomponenten bilden dann ein Versorgungsnetz aus. Das Netzmedium ist elektrische Energie.

Die Funktion einer jeweiligen Versorgungsnetzkomponente wird durch ihre Funktionsgruppe 16 bestimmt. Die Funktionsgruppe 16 kann beispielsweise als Energiespeicher, Energiewandler, Energiequelle oder als Energieverbraucher ausgestaltet sein. Die Funktionsgruppe 16 ist mittels einer Kopplungseinheit 18, die auch Gateway genannt werden kann, jeweils mit der ersten Kontakteinheit 12 und einer zweiten Kontakteinheit 14 verbunden.

Dabei werden in der dargestellten Ausführungsform parallel zueinander drei Netzwerke errichtet. Dies ist zum einen das sogenannte "Power-Mesh" 22, das zum Transport des Netzmediums, der elektrischen Energie, vorgesehen ist. Zwingend existiert des Weiteren parallel zu dem Power-Mesh 22 ein Daten-Mesh 20. Das Daten-Mesh 20 dient zur Kommunikation der Versorgungsnetzkomponenten 10 untereinander. Des Weiteren liegt in der dargestellten Ausführungsform ein Hilfsspannungs-Mesh 24 vor, das ebenfalls parallel zu dem Daten-Mesh 20 und dem Power-Mesh 22 errichtet ist. Das Hilfsspannungs-Mesh 24 muss jedoch nicht zwingend vorhanden sein. In der vorliegenden Ausführungsform ist das Hilfsspannungs-Mesh 24 jedoch vorgesehen. Es dient zur Versorgung von elektrischen Komponenten der Versorgungsnetzkomponente mit elektrischer Energie. Dies können insbesondere die Kopplungseinheit 18 und eventuell Komponenten der ersten Kontakteinheit 12 und der zweiten Kontakteinheit 14 sein. Auf diese Weise kann dann beispielsweise sichergestellt werden, dass die Versorgungsnetzkomponente 10 kompatibel mit weiteren Versorgungsnetzkomponenten des Versorgungsnetzes ist und dann eine Übertragung des Netzmediums bzw. der elektrischen Energie erst dann erfolgt, wenn die Kompatibilität als vorhanden eingestuft wurde.

In der Kopplungseinheit 18 ist eine Regelungseinrichtung 26 vorgesehen. Die Regelungseinrichtung 26 dient zum Regeln der Funktionsgruppe 16. Die Anordnung der Regelungseinrichtung 26 in der Kopplungseinheit 18 ist dabei lediglich beispielhaft zu verstehen, sie kann physisch auch innerhalb der Funktionsgruppe 16 angeordnet sein. In den im Folgenden dargestellten Ausführungsbeispielen ist die Funktionsgruppe 16 ein Energiespeicher. Insofern kann die Regelungseinrichtung 26 dazu ausgebildet sein, die Funktionsgruppe 16 zu beladen bzw. zu entladen.

Des Weiteren weist die Versorgungsnetzkomponente eine Identifikationseinheit 30 auf. Die Identifikationseinheit 30 trägt in sich eine eindeutige Identifizierung der Versorgungsnetzkomponente 10. Diese dient zur eindeutigen Identifizierung der jeweiligen Versorgungsnetzkomponente 10 innerhalb des Versorgungsnetzes, was ein eindeutiges Routing innerhalb der drei Netzwerke 20, 22, 24 ermöglicht. Des Weiteren kann die Versorgungsnetzkomponente 10 einen zumindest teilweise beschreibbaren Speicher 32 aufweisen. In diesem kann die Versorgungsnetzkomponente 10 einem bestimmten Nutzer zugewiesen werden und es können Rechte zum Zugriff auf die Versorgungsnetzkomponente 10 für andere Nutzer bzw. andere Versorgungsnetzkomponenten festgelegt werden. In dem Speicher 32 können auch andere Daten über den Zustand der Versorgungsnetzkomponente 10 abgelegt werden, beispielsweise einer Anzahl von Ladezyklen, die die Regelungseinrichtung 26 ausgeführt hat.

Jede der Kontakteinheiten 12, 14 weist eine Kommunikationsschnittstelle 34 auf, die eine Schnittstelle für das Daten-Mesh 20 zu einer weiteren Kontakteinheit bereitstellt. Des Weiteren weist jede der Kontakteinheiten 12, 14 eine Transportschnittstelle 36 auf, die eine Schnittstelle zur Übertragung des Netzmediums, in der erläuterten Ausführungsform elektrischer Energie, in dem Power-Mesh 22 bereitstellt. Darüber hinaus weist in der dargestellten Ausführungsform jede Kontakteinheit 12, 14 auch eine Hilfsspannungsschnittstelle 38 auf, die zur Übertragung der Hilfsspannung innerhalb des Hilfsspannungs-Mesh 24 zu benachbarten Versorgungsnetzkomponenten dient.

Des Weiteren kann die Versorgungsnetzkomponente 10 einen Schalter 39 aufweisen. Dieser Schalter 39 kann durch die Versorgungsnetzkomponente 10 selbsttätig schaltbar sein. Er dient dazu, eine Übertragung des Netzmediums, in der vorliegenden Ausführungsform elektrischer Energie, von und zu der Funktionsgruppe 16 zu unterbrechen. Die Funktionsgruppe 16 kann dann etwa nicht mehr be- und entladen werden. Der Schalter 39 kann beispielsweise auf von der Regelungseinrichtung 26 geschaltet werden. Dies ermöglicht ein Abtrennen der Funktionsgruppe 16 von dem Power-Mesh 22, beispielsweise in dem Fall, dass die Funktionsgruppe 16 nicht mehr funktionsfähig ist oder aufgrund bestimmter Parameterüberschreitungen als gefährlich eingestuft wurde.

Derartige Parameter können beispielsweise mittels eines Sensors 28 erfasst werden. Selbstverständlich kann auch mehr als ein Sensor 28 vorgesehen sein. Der Sensor 28 kann beliebige physikalische Parameter der Versorgungsnetzkomponente 10 erfassen, beispielsweise Temperaturen, Leistungen, Ströme, Spannungen oder Widerstände innerhalb der Versorgungsnetzkomponente 10, insbesondere innerhalb der Funktionsgruppe 16.

Die Transportschnittstelle 36 und die Hilfsspannungsschnittstelle 38 können grundsätzlich drahtgebunden ausgeführt sein. Die Kommunikationsschnittstelle 34 kann drahtgebunden oder drahtlos ausgeführt sein. Insbesondere kann auch eine kapazitive, induktive oder optische Übertragung über die Kommunikationsschnittstelle 34 erfolgen. Insbesondere ist jedoch vorgesehen, dass die Kommunikationsschnittstelle 34 mittels RFID-Techniken mit benachbarten Versorgungsnetzkomponenten 10 kommuniziert. Dies ermöglicht insbesondere eine galvanische Trennung des Daten-Mesh 20 von dem Power-Mesh 22 und dem Hilfsspannungs-Mesh 24.

Des Weiteren kann die Versorgungsnetzkomponente 10 zumindest ein Teilelement 41 einer Diebstahlsicherung aufweisen, die eine Entwendung der Versorgungsnetzkomponente 10 im Betrieb verhindern kann.

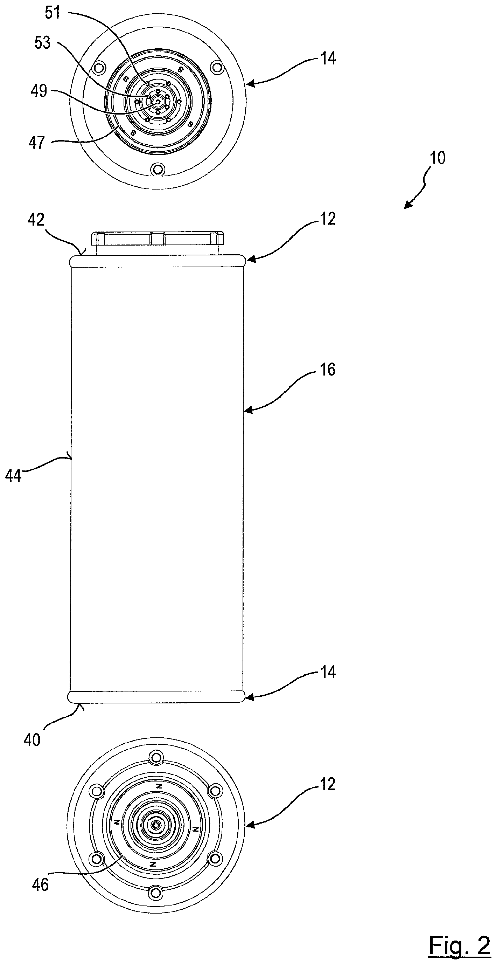

Fig. 2 zeigt eine schematische Ansicht einer Versorgungsnetzkomponente 10, die als Energiespeicher ausgebildet ist. Gleiche Elemente sind mit gleichen Bezugszeichen gekennzeichnet und werden nicht erneut beschrieben. Die Versorgungsnetzkomponente 10 weist eine zylindrische Außenform auf. Der Zylinder wird durch eine Grundfläche 40, eine Deckfläche 42 und eine Mantelfläche 44 begrenzt. Die Grundfläche 40, die Deckfläche 42 und die Mantelfläche 44 bilden somit ein Gehäuse des Zylinders bzw. der Versorgungsnetzkomponente 10 aus.

Die Mantelfläche 44 kann beispielsweise austauschbar vorgesehen, auf diese Weise kann die Mantelfläche 44 beispielsweise unterschiedlich farblich ausgestaltet sein, je nachdem welcher Nutzer die Versorgungsnetzkomponente 10 nutzt.

Die erste Kontakteinheit 12 und die zweite Kontakteinheit 14 verschließen quasi die von der Mantelfläche 44 umhüllte Funktionsgruppe 16, die als Energiespeicher ausgebildet ist, an der Grundfläche 40 und der Deckfläche 42 des Zylinders. Hierzu weist die erste Kontakteinheit 12 einen Permanentmagneten 46 und die zweite Kontakteinheit 14 einen Permanentmagneten 47 auf. Mittels dieser Permanentmagnete 46, 47 können die Kontakteinheiten 12, 14 an der Funktionsgruppe 16 angebracht werden. Es kann aber auch vorgesehen sein, dass die Kontakteinheiten 14, 16 jeweils mit der Funktionsgruppe 16 verschraubt sind oder auf andere Weise fest mit der Funktionsgruppe verbunden werden. Alternativ oder kumulativ dazu dienen die Permanentmagnete 46, 47 dazu, die Versorgungsnetzkomponenten 10 unterienander zu verbinden, die im Folgenden erläuterten Steckverbindungen oder Kontaktverbindungen zu sichern. So können die Versorgungsnetzkomponenten 10 ohne Schäden durch eine Knickbewegung voneinander getrennt werden. Insbesondere kann diese Anbringung aufgrund einer ringförmigen Ausgestaltung der Permanentmagneten 46, 47 in beliebiger Orientierung der Kontakteinheiten 12, 14 erfolgen. Des Weiteren lassen sich die Kontakteinheiten 12, 14 auf einfache Weise wieder von der Funktionsgruppe 16 lösen, indem die Haltekraft der Permanentmagneten 46, 47 überwunden wird, beispielsweise durch ein Abknicken einer jeweiligen Kontakteinheit 12, 14 von der Funktionsgruppe 16. Die Kontakteinheiten 12, 14 sind in den dargestellten Ausführungsformen nach dem Stecker/Buchse-Prinzip ausgebildet. Dieses wird im Folgenden noch näher erläutert. Insbesondere weist die zweite Kontakteinheit 14 mindestens drei Federkontakte auf. Zentral ist ein Federkontakt 49 für die Hilfsspannung ausgebildet, der die Hilfsspannungsschnittstelle 38 ausbildet. Des Weiteren sind Federkontakte 51, 53 ausgebildet, wobei der Federkontakt 51 eine Plus-Spannung führt und an dem Federkontakt 53 Masse anliegt. Die Federkontakte 51, 53 bilden die Transportschnittstelle 26 der zweiten Kontakteinheit 14 aus. Dabei können der Federkontakt 49 und auch sowohl der Federkontakt 51 und der Federkontakt 53 jeweils als Federkontaktgruppen ausgebildet sein, wobei eine Federkontaktgruppe mehrere einzelne Federkontakte aufweist. Auf diese Weise kann die über dann eine Federkontaktgruppe übertragbare Leistung erhöht werden.

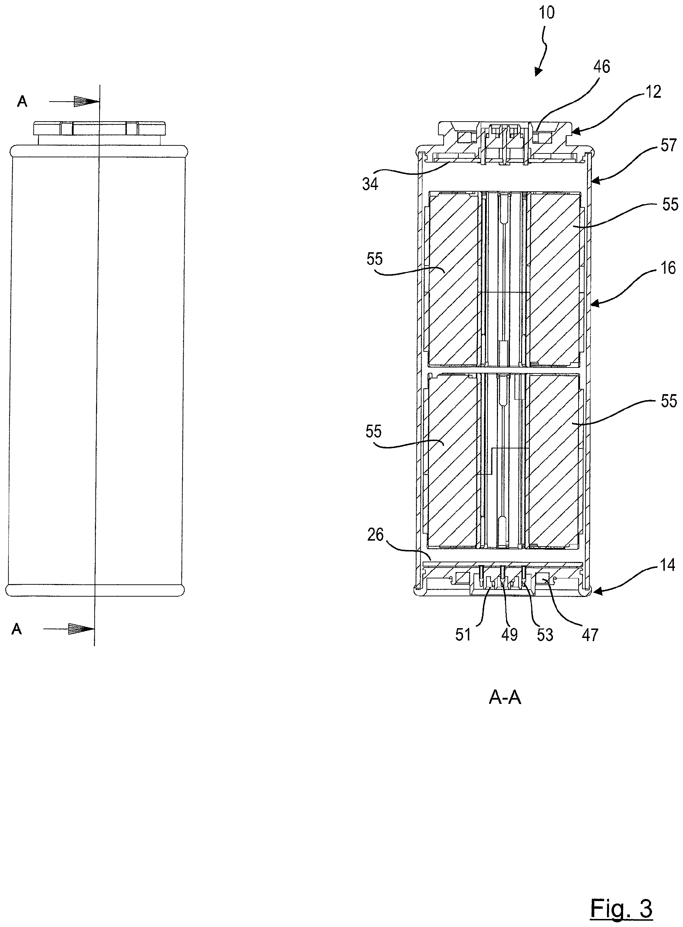

Die Fig. 3 zeigt eine Querschnittsansicht entlang einer Schnittlinie A-A der Versorgungsnetzkomponente 10. Gleiche Elemente sind mit gleichen Bezugszeichen gekennzeichnet und werden nicht erneut erläutert.

Innerhalb der Funktionsgruppe 16 weist die Versorgungsnetzkomponente 10 mehrere Funktionseinheiten 55 auf. Jede der Funktionseinheiten 55 ist als eine wieder aufladbare Lithium-Ionen-Zelle ausgebildet, die dazu in der Lage ist, elektrische Energie aufzunehmen, zu speichern und bei Bedarf wieder abzugeben. Die Funktionseinheiten 55 sind von einem Mantelelement 57 umgeben, das die Mantelfläche 44 ausbildet. Wie bereits voranstehend erläutert wurde, ist das Mantelelement 57 grundsätzlich austauschbar, so dass ein äußerer ästhetischer Eindruck der Versorgungsnetzkomponente 10 beliebig variiert werden kann. Zwischen der ersten Kontakteinheit 12 und der zweiten Kontakteinheit 14 können grundsätzlich Längsstege (nicht dargestellt) vorgesehen sein, die sich parallel zu der Mantelfläche 57 erstrecken und eine direkte Stromdurchführung von der ersten Kontakteinheit 12 zu der zweiten Kontakteinheit 14 und umgekehrt ermöglichen, ohne dass elektrische Energie bzw. Strom durch die Funktionseinheiten 55 laufen muss.

Des Weiteren weist die Versorgungsnetzkomponente 10 an der ersten Kontakteinheit 12 die Kommunikationsschnittstelle 34 und an der zweiten Kontakteinheit 14 die Regelungseinrichtung 26 auf. Selbstverständlich können die Regelungseinrichtung 26 und die Kommunikationsschnittstelle 34 auch umgekehrt angeordnet sein. Des Weiteren kann es vorgesehen sein, dass jede der Kontakteinheiten 12, 14 sowohl eine Regelungseinrichtung 26 als auch eine Kommunikationsschnittstelle 34 aufweist. Die Kommunikationsschnittstelle 34 ist mittels RFID-Technik ausgebildet, insbesondere ein aktiver RFID-Transponder, um das Kommunizieren mit anderen Versorgungsnetzkomponenten 10 zu ermöglichen.

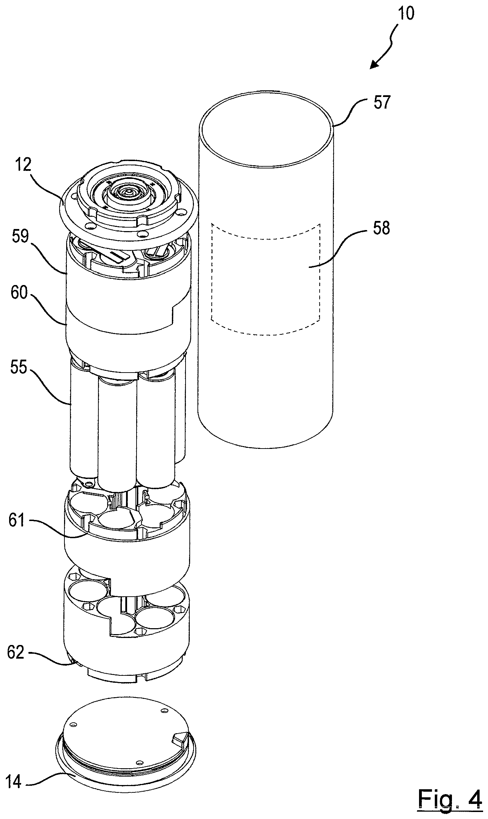

Fig. 4 zeigt die Versorgungsnetzkomponente 10 in einer isometrischen Explosionsansicht. Gleiche Elemente sind wiederum mit gleichen Bezugszeichen gekennzeichnet und werden nicht erneut erläutert.

Die Versorgungsnetzkomponente 10 wird nach außen von dem Mantelelement 57 und den Kontakteinheiten 12, 14 begrenzt. Die Funktionseinheiten 55 sind jedoch nicht lose in dem Mantelelement 57 angeordnet, sondern werden von mehreren Halteelementen 59 bis 62 umgeben, die die Funktionselemente fest innerhalb des Mantelelements 57 halten. Dies ermöglicht einen robusten Aufbau der Versorgungsnetzkomponente 10, was ihren Transport und ihre Lagerung vereinfacht.

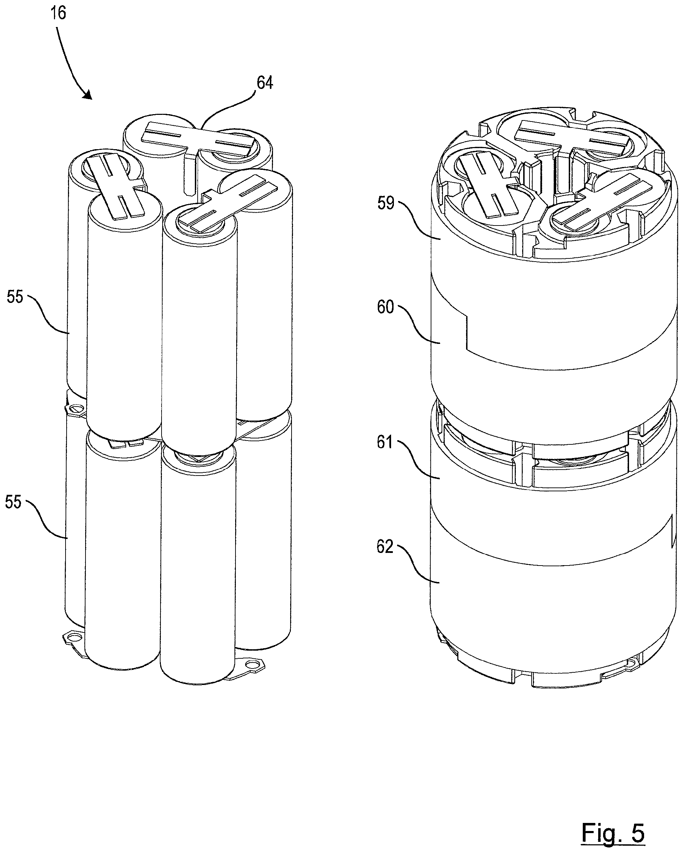

Fig. 5 zeigt eine teilweise zusammengebaute Ansicht, die die Funktionseinheiten 55 detaillierter darstellt.

Insgesamt weist die Funktionsgruppe 16 der Versorgungsnetzkomponente 10 zwölf Funktionseinheiten 55 auf. Diese sind durch Verbindungsstege 64 miteinander verbunden, insbesondere in Reihe geschaltet. Grundsätzlich sind natürlich auch andere Reihenschaltungen und/oder Parallelschaltungen denkbar, um ein gewünschtes Spannungs-/Kapazitätsverhältnis der Funktionseinheiten 55 bereitzustellen.

Wie dargestellt ist, sind die Funktionseinheiten 55 dann in den Halteelementen 59 bis 62 gehalten, so dass sich ein kompakter zylindrischer Aufbau der Funktionsgruppe 16 und damit der Versorgungsnetzkomponente 10 ergibt.

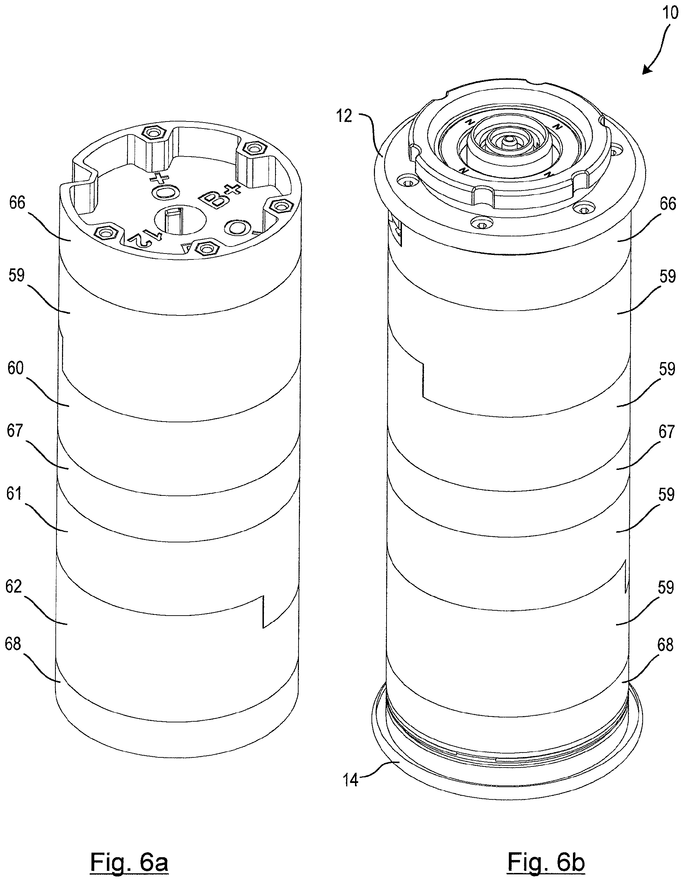

In der Fig. 6a ist ein weiterer teilweiser Zusammenbau der Versorgungsnetzkomponente 10 dargestellt. Die zusammengesetzten Halteelemente 59 bis 62 halten die Funktionseinheiten 55. Des Weiteren sind zur Vermeidung von Kurzschlüssen Isolationselemente 66, 67, 68 vorgesehen, die die Funktionseinheiten 55 untereinander und die Funktionsgruppe gegenüber den Kontakteinheiten 12, 14 isolieren.

In der Fig. 6b ist die Versorgungsnetzkomponente 10 im zusammengebauten Zustand unter Weglassung des Mantelelements 57 dargestellt. Die Versorgungsnetzkomponente 10 ist im Prinzip so schon einsatzfähig. Das Mantelelement 57 schirmt dann die Versorgungsnetzkomponente 10 lediglich nach außen ab und stellt einen beliebig beeinflussbaren ästhetischen Eindruck bereit. Des Weiteren kann das Mantelelement 57 und seine Verbindungen zu angrenzenden Elementen wasserdicht ausgestaltet sein, um die innen liegende Funktionsgruppe 16 zu schützen. Des Weiteren kann das Mantelelement 57 eine mit einer gestrichelten Linie angedeutete Anzeigevorrichtung 58 aufweisen. Diese kann einem Nutzer beispielsweise Parameter der Funktionsgruppe 16, etwa eine Ladezustand, anzeigen. Bei der Anzeigevorrichtung aknn es sich insbesondere um ein so genanntens "E-Paper" handeln. Das E-Paper kann die gesamte Mantelfläche ausbilden. Bei dem E-Paper kann es sich beispielsweise um eine aus LCD-Bausteinen, insbesondere ChLCD (Cholesteric Liquid Crystal Display)-Bausteinen, zusammengesetzte Anzeigevorrichtung sein. Es kann auch vorgesehen sein, dass eine Anzeigevorrichtung über eine Steckverbindung bzw. einen oder mehrer der Federkontakte, bspw. über die Kommunikationsschnittstelle an die Versorgungsnetzkomponente 10 zur Anzeige von Informationen angeschlossen werden kann.

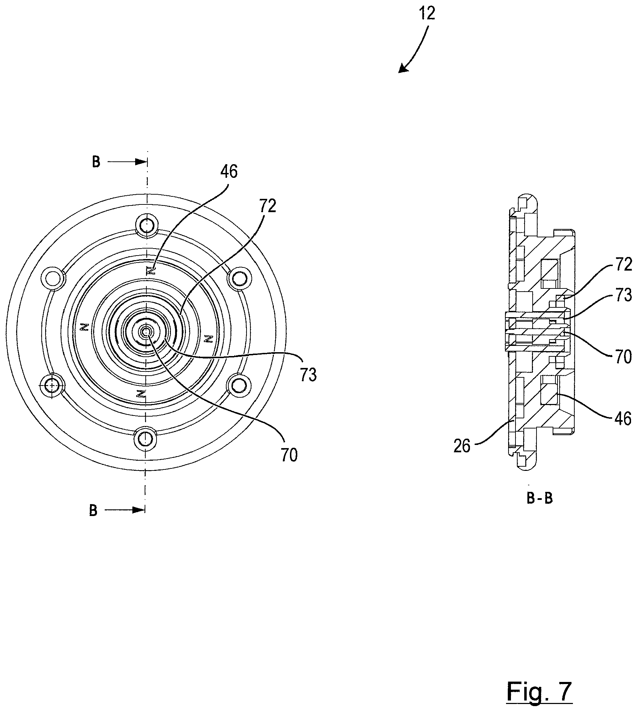

Fig. 7 zeigt eine detaillierte Ansicht der ersten Kontakteinheit 12. Gleiche Elemente sind wiederum mit gleichen Bezugszeichen gekennzeichnet und werden nicht erneut erläutert. Die erste Kontakteinheit 12 ist als "Buchse" ausgebildet. Entsprechend weist sie einen Gegenkontakt 70 auf, der in der ersten Kontakteinheit 12 die Hilfsspannungsschnittstelle 38 ausbildet. Dieser kann zur Kontaktierung von einer als "Stecker" ausgebildeten Kontakteinheit dienen, wie beispielsweise der zweiten Kontakteinheit 14.

Des Weiteren weist die erste Kontakteinheit 12 zwei Ringe 72 und 73 auf, die als Transportschnittstelle 36 der ersten Kontakteinheit 12 dienen. Dabei ist ein Ring mit Masse belegt. Die Ringe können somit die entsprechenden Federkontakte 51, 53 einer als "Stecker" ausgebildeten Kontakteinheit kontaktieren. Durch die Ausbildung als Ringe ist darüber hinaus keine bestimmte Orientierung zur Herstellung einer Verbindung zwischen zwei Kontakteinheiten 12, 14 einzuhalten.

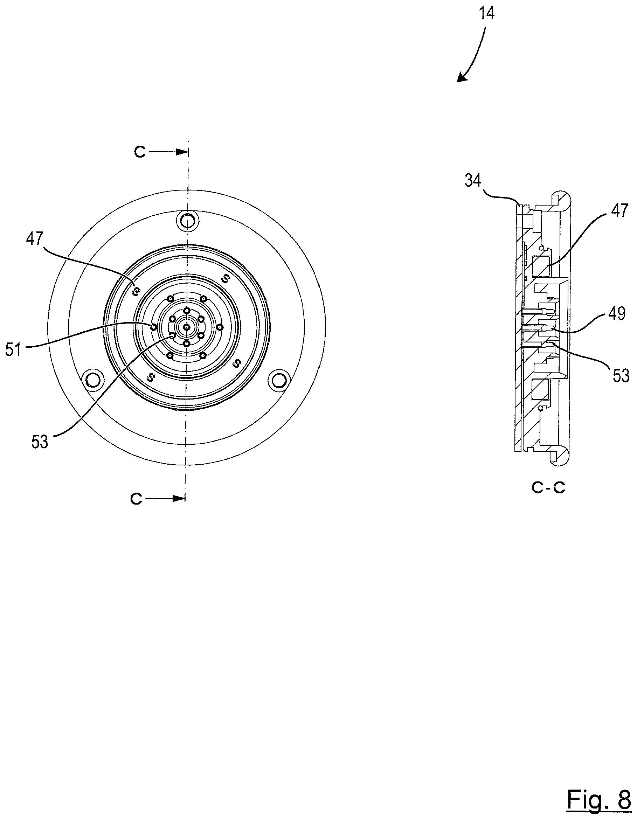

In der Fig. 8 ist in einer Detailansicht die zweite Kontakteinheit 14 dargestellt, die als "Stecker" ausgebildet ist. Entsprechend kann eine nach Art der zweiten Kontakteinheit 14 ausgebildete Kontakteinheit einfach mit einer nach Art der ersten Kontakteinheit 12 ausgebildeten Kontakteinheit verbunden werden. Entsprechende Elemente sind mit den bekannten Bezugszeichen gekennzeichnet und werden nicht erneut erläutert.

Darüber hinaus kann sowohl bei der ersten Kontakteinheit 12 als auch bei der zweiten Kontakteinheit 14 vorgesehen sein, dass diese mit Kabeln versehen sind, um neben denen in Fig. 7 und 8 dargestellten Standardschnittstellen 34, 36, 38 eine Verbindung mit anderen Funktionsgruppen, beispielsweise Energiequellen oder Energiespeichern nach anderen Standards, etwa Autobatterien, bereitzustellen.

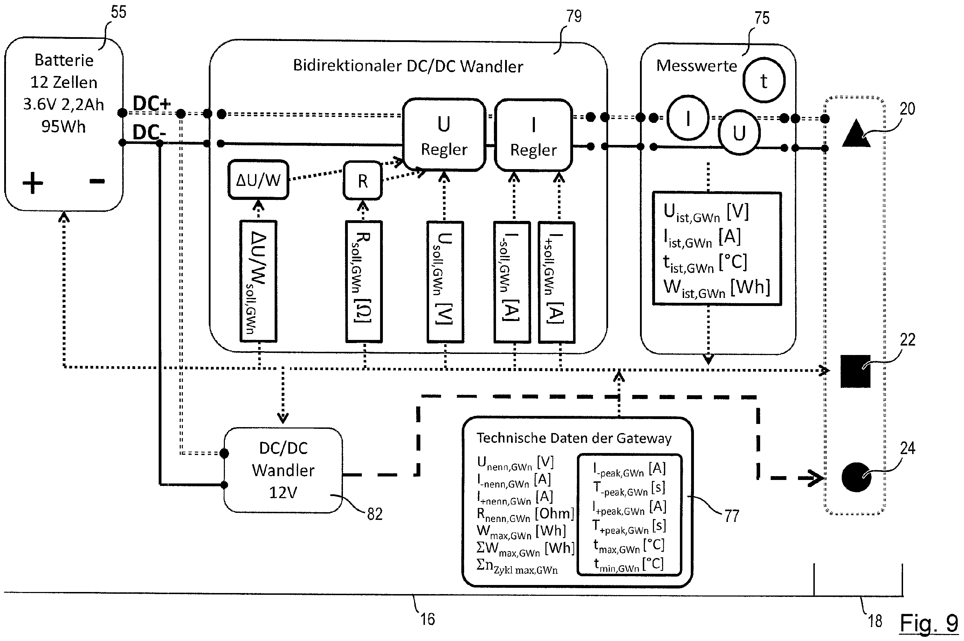

In der Fig. 9 ist ein Beispiel für eine Funktionsgruppe 16 mit einer Kopplungseinheit 18 dargestellt. Die Kopplungseinheit 18 weist Kontakt für das Daten-Mesh 20, das Power-Mesh 22 und das Hilfsspannungs-Mesh 24 auf. Darüber hinaus weist die Funktionsgruppe 16 wie voranstehend beschrieben zwölf Funktionseinheiten 55 auf.

Die in der Fig. 9 angegebenen Abkürzungen haben die folgenden Bedeutungen: "soll" steht für einen Sollwert, "ist" steht für einen Ist-Wert, "GWn" steht als Index für die Kopplungseinheit 18, U steht für eine Spannung, I steht für einen Strom, R für einen Widerstand, W steht für Watt, "nenn" steht für Nennwerte, "max" steht für Maximalwerte, "min" steht für Minimalwerte, t steht für eine Temperatur, T steht für eine Zeit, "peak" steht für einen Spitzenwert, n_{zykl} steht für eine Anzahl von Lade- bzw. Entladezyklen. Die angegebenen Einheiten entsprechen dem üblichen SI-System.

Wie bereits in der Beschreibungseinleitung beschrieben, kann die Funktionsgruppe 16 einen bidirektionalen Gleichstromwandler 79 aufweisen, der einen Be- und Entladevorgang der Funktionseinheit 55 regelt. Die entsprechenden Signalverläufe sind in der Fig. 9 dargestellt. Parameter, die Rahmenbedingungen vorgeben, können in einem Datensatz 77 in der Versorgungsnetzkomponente 10 bzw. in der Funktionsgruppe 16 hinterlegt sein und stehen dem bidirektionalen Gleichstromwandler 79 somit zur Verfügung. Des Weiteren ist ein zweiter Gleichstromwandler 82 vorgesehen, der an der Hilfsspannungsschnittstelle 38 für das Hilfsspannungs-Mesh die Hilfsspannung bereitstellt.

Des Weiteren sind in der Funktionsgruppe 16 Sensoren 75 angeordnet, die Ist-Größen innerhalb der Funktionsgruppe 16 messen. Diese Messwerte können innerhalb des Daten-Mesh 20 weitergereicht oder innerhalb der Versorgungsnetzkomponente 10 ausgewertet werden. Beispielsweise kann, wenn einer dieser Messwerte einen kritischen Wert erreicht, der Schalter 39 aktuiert werden.

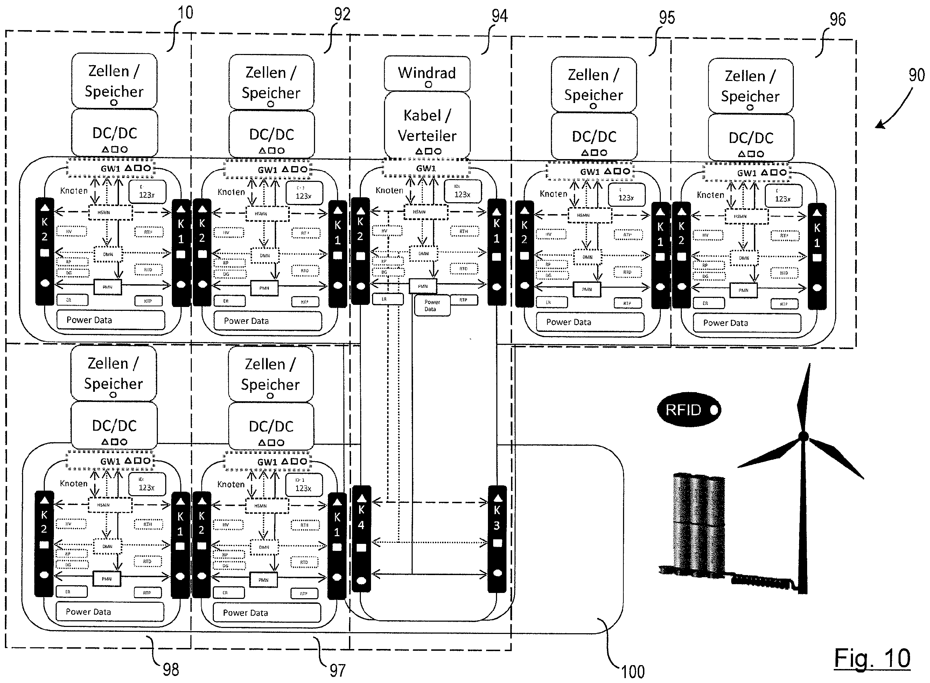

In der Fig. 10 ist beispielhaft ein Versorgungsnetz 90 dargestellt, das mehrere Versorgungsnetzkomponenten 10, 92, 94, 95, 96, 97 und 98 aufweist. Dabei ist das Versorgungsnetz 90 am Beispiel einer Windkraftanlage erläutert. Entsprechend weist das Versorgungsnetz 90 eine Versorgungsnetzkomponente 94 auf, die als Energiequelle ausgebildet ist. Die Versorgungsnetzkomponente 94 weist entsprechend vier Kontakteinheiten und als Funktionsgruppe das Windrad auf, wobei die Funktionsgruppe darüber hinaus Kabel und Verteiler zum Anbinden des Windrads innerhalb des Power-Mesh 22 an seine vier Kontaktpunkte aufweist. An drei der vier Kontaktpunkte der Versorgungsnetzkomponente 94 sind jeweils zwei voranstehend beschriebene, als Energiespeicher ausgebildete Versorgungsnetzkomponenten 10, 92, 95, 96, 97, 98 geschaltet. Das Power-Mesh 22 kann so in einem Gleichstrombetrieb betrieben werden. Jede der als Energiespeicher ausgebildeten Versorgungsnetzkomponenten 10, 92, 94, 95, 96, 97, 98 weist innerhalb seiner Funktionsgruppe einen eigenen Gleichstromwandler auf, der individuell für die jeweilige Funktionsgruppe jeder Versorgungsnetzkomponente 10, 92, 95, 96, 97, 98 das Be- und Entladen regeln kann. Ein Balancieren der einzelnen Versorgungsnetzkomponenten 10, 92, 95, 96, 97, 98 ist somit nicht mehr notwendig. Auf diese Weise kann besonders einfach ein großer Energiespeicher zum Zwischenspeichern der von der Energiequelle 94 bereitgestellten Energie zur Verfügung gestellt werden. Schematisch ist des Weiteren eine offene Fortführung 100 des Versorgungsnetzes 90 dargestellt, hier können sich dann weitere Versorgungsnetzkomponenten, beispielsweise Verbraucher, anschließen.

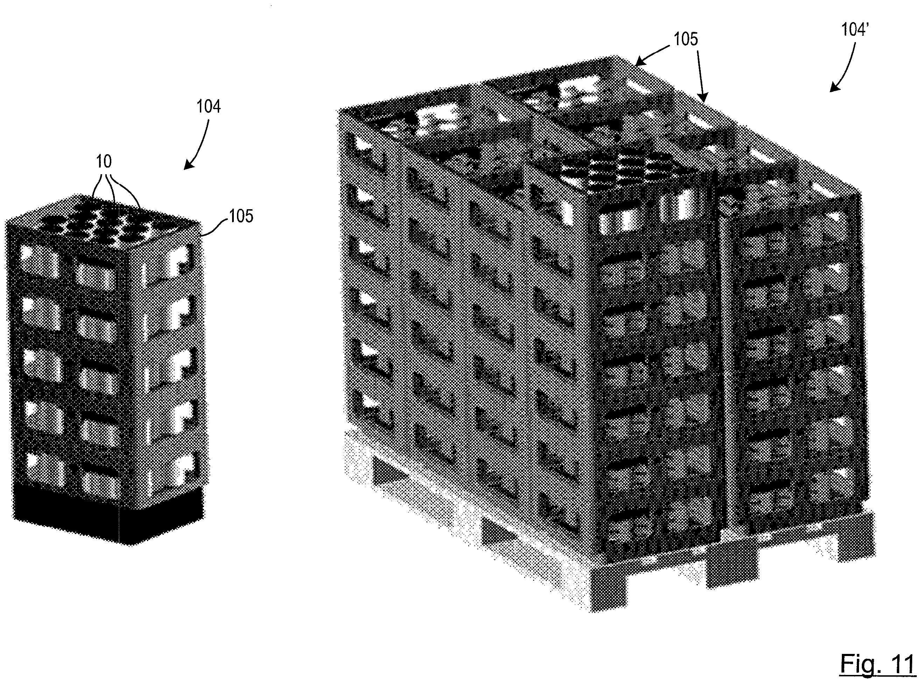

In der Fig. 11 sind schematisch Ausführungsformen eines Energiespeicherblocks 104 dargestellt.

Die in den Fig. 2 bis 8 erläuterte, als Energiespeicher ausgebildete Versorgungsnetzkomponente 10 kann zusammen mit weiteren gleichartig ausgebildeten Versorgungsnetzkomponenten zu einem Energiespeicherblock 104 zusammengeschaltet werden. Dazu können Packverbinder 105 vorgesehen sein, die vorliegend in der Art von Kisten ausgebildet sind. In diese können mehrere Versorgungsnetzkomponenten 10 eingeordnet werden, die dann automatisch miteinander seriell und/oder parallel verbunden sind. Die Packverbinder 105 können wiederum untereinander seriell und/oder parallel verbunden sein. Auf diese Weise können skalierbare Energiespeicher bereitgestellt werden. So lassen sich auch Energiespeicher mit großen Kapazitäten von über einer Megawattstunde bereitstellen, die als Spitzenstromspeicher beispielsweise in Windkraftanlagen, wie voranstehend in Fig. 10 erläutert wurde, geeignet sind. Die Energiespeicher lassen sich dabei aufgrund der einheitlich ausgestalteten Kontakteinheiten 12, 14 einfach miteinander und mit den Packverbindern 105 verbinden.

## Patentansprüche

1. Energiespeicherkomponente (10) für ein Versorgungsnetz (90) mit elektrischer Energie als Netzmedium, wobei die Energiespeicherkomponente (10) umfasst
- mindestens eine Kontakteinheit (12, 14) zum Kontaktieren mindestens einer weiteren Energiespeicherkomponente (92-98) des Versorgungsnetzes (90),
- eine Batterie (16), die mindestens eine Batteriezelle (55) aufweist, und
- mindestens ein Gateway (18) zum Koppeln der mindestens einen Kontakteinheit (12, 14) mit der Batterie (16),
wobei die mindestens eine Kontakteinheit (12, 14) eine Kommunikationsschnittstelle (34) zum Kommunizieren mit der mindestens einen weiteren Energiespeicherkomponente (92-98) und eine Transportschnittstelle (36) zum Transportieren der elektrischen Energie zu der mindestens einen weiteren Energiespeicherkomponente (92-98) aufweist,
wobei ferner die Energiespeicherkomponente (10) mindestens einen Schalter zum Trennen der Batterie (16) von dem Netzmedium aufweist und die Energiespeicherkomponente (10) sich so eigenverantwortlich nach Kontrolle der Kompatibilität zum Versorgungsnetz (90) zuschaltet oder abschaltet.

2. Energiespeicherkomponente nach Anspruch 1, bei der das Gateway (18) eine Regelungseinrichtung (26) zum Regeln der Batterie (16) aufweist.

3. Energiespeicherkomponente nach Anspruch 2, bei der die Regelungseinrichtung (26) derart ausgebildet ist, dass sie die Batterie (16) bei einem Ausfall des Gateways (34) von dem Versorgungsnetz (90) trennt.

4. Energiespeicherkomponente nach einem der Ansprüche 1 bis 3, bei der die mindestens eine Kontakteinheit (12, 14) des weiteren eine Hilfsspannungsschnittstelle (38) zum Übertragen einer Hilfsspannung zur Versorgung der Kontakteinheit (12, 14) und/oder des Gateway (18) mit elektrischer Energie aufweist.

5. Energiespeicherkomponente nach einem der Ansprüche 1 bis 4, bei der die Hilfsspannungsschnittstelle (38) koaxial zu der Transportschnittstelle (36) ausgebildet ist.

6. Energiespeicherkomponente nach einem der Ansprüche 1 bis 5, bei der die Transportschnittstelle (36) die elektrische Energie in Form eines Gleichstroms überträgt und/oder
die Batterie (16) zwölf Batteriezellen (55) aufweist, die jeweils als Lithiumzelle ausgebildet sind und/oder die Batterie (16) mindestens einen Gleichstromwandler (79, 82) aufweist und/oder
die Batterie (16) mindestens einen Gleichstromwandler (79, 82) und eine Mehrzahl von Batteriezellen (55) aufweist, wobei jeder Batteriezelle (55) jeweils ein Gleichstromwandler zugeordnet ist.

7. Energiespeicherkomponente nach einem der Ansprüche 1 bis 6, bei der die Energiespeicherkomponente (10) mindestens einen Sensor (75) zum Erfassen eines physikalischen Parameters der Batteriezelle (55) aufweist, insbesondere wobei der Parameter eine Spannung, ein Strom oder eine Temperatur der mindestens einen Batteriezelle (55) ist, und/oder
die Energiespeicherkomponente mindestens einen Sensor (28) zum Erfassen einer Umgebungstemperatur der Energiespeicherkomponente oder einer Beschleunigung der Energiespeicherkomponente aufweist und/oder die mindestens eine Kontakteinheit (12, 14) mit der Batterie (16) mittels mindestens eines Permanentmagneten (46, 47) verbunden ist und/oder
die Kommunikationsschnittstelle (34) und/oder die Transportschnittstelle (36) rotationssymmetrisch ausgebildet ist.

8. Energiespeicherkomponente nach einem der Ansprüche 1 bis 7, bei der die Transportschnittstelle (36) einer der mindestens einen Kontakteinheit (12, 14) unter Verwendung von Federkontaktstiften (49, 51 , 53) bereitgestellt ist und/oder
die Transportschnittstelle (36) einer der mindestens einen Kontakteinheit (12, 14) mittels zweier ringförmiger, koaxialer Kontakte (51 , 53) bereitgestellt ist und/oder
die Transportschnittstelle (36) der mindestens einen Kontakteinheit (12, 14) isolierende Stege zwischen einzelnen Kontakten (49, 51 , 53) aufweist.

9. Energiespeicherkomponente nach einem der Ansprüche 1 bis 8, bei der die Kommunikationsschnittstelle (34) eine drahtlose Kommunikationsschnittstelle, wie bspw. eine RFID-Kommunikationsschnittstelle, ist und/oder
die Energiespeicherkomponente einen zumindest teilweise wiederbeschreibbaren Speicher (32) aufweist und/oder die Energiespeicherkomponente (10) zumindest ein Teilelement (41) eines Diebstahlsicherungssystems aufweist und/oder
die Energiespeicherkomponente mindestens eine erste und eine zweite Kontakteinheit (12, 14) aufweist, wobei die erste Kontakteinheit (12) in der Form eines Steckers und die zweite Kontakteinheit (14) in der Form einer Buchse ausgebildet ist, und/oder
die Energiespeicherkomponente (10) eine Identifikationseinheit (30) aufweist, die die Energiespeicherkomponente (10) eindeutig kennzeichnet, und/oder eine Zuordnung der Energiespeicherkomponente (10) zu einer Benutzergruppe in einem Speicher (32) der Energiespeicherkomponente (10) abgelegt ist, und/oder
die Energiespeicherkomponente (10) ein Gehäuse (40, 42, 44) mit im Wesentlichen einer Form eines Zylinders aufweist, wobei die Energiespeicherkomponente (10) eine erste und eine zweite Kontakteinheit (12, 14) aufweist, wobei die jeweils eine Grundfläche (40) und eine Deckfläche (42) des Zylinders ausbilden.

10. Energiespeicherblock (104) für ein Versorgungsnetz (90) für elektrische Energie als Netzmedium, wobei der Energiespeicherblock (104) mehrere Energiespeicherkomponenten (10) nach einem der Ansprüche 1 bis 9 aufweist, die parallel und/oder in Reihe zueinander geschaltet sind.

## Claims

1. Energy storage component (10) for a supply network (90) with electrical energy as network medium, wherein the energy storage component (10) comprises
- at least one contact unit (12, 14) for making contact with at least one further energy storage component (92-98) of the supply network (90),
- a battery (16) having at least one battery cell (55), and
- at least one gateway (18) for coupling the at least one contact unit (12, 14) to the battery (16),
wherein the at least one contact unit (12, 14) has a communication interface (34) for communicating with the at least one further energy storage component (92-98) and a transport interface (36) for transporting the electrical energy to the at least one further energy storage component (92-98),
wherein the energy storage component (10) furthermore has at least one switch for disconnecting the battery (16) from the network medium and the energy storage component (10) thus autonomously switches on or switches off after monitoring the compatibility with the supply network (90).

2. Energy storage component according to Claim 1, wherein the gateway (18) has a regulating device (26) for regulating the battery (16).

3. Energy storage component according to Claim 2, wherein the regulating device (26) is configured in such a way that it disconnects the battery (16) from the supply network (90) in the event of a failure of the gateway (34).

4. Energy storage component according to any of Claims 1 to 3, wherein the at least one contact unit (12, 14) furthermore has an auxiliary voltage interface (38) for transmitting an auxiliary voltage for supplying the contact unit (12, 14) and/or the gateway (18) with electrical energy.

5. Energy storage component according to any of Claims 1 to 4, wherein the auxiliary voltage interface (38) is configured coaxially with respect to the transport interface (36).

6. Energy storage component according to any of Claims 1 to 5, wherein the transport interface (36) transmits the electrical energy in the form of a direct current and/or
the battery (16) has twelve battery cells (55) each configured as a lithium cell and/or
the battery (16) has at least one DC-DC converter (79, 82) and/or
the battery (16) has at least one DC-DC converter (79, 82) and a plurality of battery cells (55), wherein a respective DC-DC converter is assigned to each battery cell (55).

7. Energy storage component according to any of Claims 1 to 6, wherein the energy storage component (10) has at least one sensor (75) for detecting a physical parameter of the battery cell (55), in particular wherein the parameter is a voltage, a current or a temperature of the at least one battery cell (55), and/or
the energy storage component has at least one sensor (28) for detecting an ambient temperature of the energy storage component or an acceleration of the energy storage component, and/or
the at least one contact unit (12, 14) is connected to the battery (16) by means of at least one permanent magnet (46, 47), and/or
the communication interface (34) and/or the transport interface (36) are/is configured in a rotationally symmetrical fashion.

8. Energy storage component according to any of Claims 1 to 7, wherein the transport interface (36) of one of the at least one contact unit (12, 14) is provided using spring contact pins (49, 51, 53), and/or
the transport interface (36) of one of the at least one contact unit (12, 14) is provided by means of two ring-shaped, coaxial contacts (51, 53), and/or
the transport interface (36) of the at least one contact unit (12, 14) has insulating webs between individual contacts (49, 51, 53).

9. Energy storage component according to any of Claims 1 to 8, wherein the communication interface (34) is a wireless communication interface, such as e.g. an RFID communication interface, and/or
the energy storage component has an at least partly rewriteable memory (32), and/or
the energy storage component (10) has at least one partial element (41) of an anti-theft protection system, and/or
the energy storage component has at least one first and one second contact unit (12, 14), wherein the first contact unit (12) is configured in the form of a plug and the second contact unit (14) is configured in the form of a socket, and/or
the energy storage component (10) has an identification unit (30), which unambiguously identifies the energy storage component (10), and/or
an assignment of the energy storage component (10) to a user group is stored in a memory (32) of the energy storage component (10), and/or
the energy storage component (10) has a housing (40, 42, 44) having substantially a shape of a cylinder, wherein the energy storage component (10) has a first and a second contact unit (12, 14), wherein the latter respectively form a base surface (40) and a top surface (42) of the cylinder.

10. Energy storage block (104) for a supply network (90) for electrical energy as network medium, wherein the energy storage block (104) has a plurality of energy storage components (10) according to any of Claims 1 to 9 which are connected in parallel and/or in series with one another.

## Revendications

1. Composant accumulateur d'énergie (10) pour un réseau d'alimentation (90) avec de l'énergie électrique à titre de support de réseau, ledit composant accumulateur d'énergie (10) incluant
- au moins une unité de contact (12, 14) pour mettre en contact au moins un autre composant accumulateur d'énergie (92-98) du réseau d'alimentation (90),
- une batterie (16), qui comprend au moins une cellule de batterie (55), et
- au moins une passerelle] (18) pour le couplage de ladite au moins une unité de contact (12, 14) avec la batterie (16),
dans lequel ladite au moins une unité de contact (12, 14) comprend une interface de communication (34) pour communiquer avec ledit au moins un autre composant accumulateur d'énergie (92-98) et une interface de transport (36) pour transporter l'énergie électrique audit au moins un autre composant accumulateur d'énergie (92-98),
dans lequel le composant accumulateur d'énergie (10) comprend en outre au moins un commutateur pour séparer la batterie (16) vis-à-vis du support de réseau, et le composant accumulateur d'énergie (10), après contrôle de la compatibilité, se branche ou se coupe ainsi sous sa propre responsabilité par rapport au réseau d'alimentation (90).

2. Composant accumulateur d'énergie selon la revendication 1, dans lequel la passerelle (18) comprend un système de régulation (24) pour réguler la batterie (16).

3. Composant accumulateur d'énergie selon la revendication 2, dans lequel le système de régulation (26) est réalisé de telle façon que la batterie (16) se sépare du réseau d'alimentation (90) lors d'une défaillance de la passerelle (34).

4. Composant accumulateur d'énergie selon l'une des revendications 1 à 3, dans lequel ladite au moins une unité de contact (12, 14) comprend en outre une interface de tension auxiliaire (38) pour la transmission d'une tension auxiliaire en vue de l'alimentation de l'unité de contact (12, 14) et/ou de la passerelle (18) avec de l'énergie électrique.

5. Composant accumulateur d'énergie selon l'une des revendications 1 à 4, dans lequel l'interface de tension auxiliaire (38) est réalisée coaxialement par rapport à l'interface de transport (36).

6. Composant accumulateur d'énergie selon l'une des revendications 1 à 5, dans lequel l'interface de transport (36) transmet l'énergie électrique sous la forme d'un courant continu, et/ou
la batterie (16) comprend 12 cellules de batterie (55) qui sont réalisées chacune sous la forme de cellules au lithium, et/ou
la batterie (16) comprend au moins un convertisseur à courant continu (79, 82), et/ou
la batterie (16) comprend au moins un convertisseur à courant continu (79, 82) et une pluralité de cellules de batterie (55), de telle façon qu'un convertisseur à courant continu respectif est associé à chaque cellule de batterie (55).

7. Composant accumulateur d'énergie selon l'une des revendications 1 à 6, dans lequel le composant accumulateur d'énergie (10) comprend au moins un capteur (75) pour la détection d'un paramètre physique de la cellule de batterie (55), en particulier dans lequel le paramètre est une tension, un courant ou une température de ladite au moins une cellule de batterie (55), et/ou
le composant accumulateur d'énergie comprend au moins un capteur (28) pour la détection d'une température environnante du composant accumulateur d'énergie ou d'une accélération du composant accumulateur d'énergie et/ou
ladite au moins une unité de contact (12, 14) est reliée à la batterie (16) au moyen d'au moins un aimant permanent (46, 47), et/ou
l'interface de communication (34) et/ou l'interface de transport (36) est réalisée à symétrie de révolution.

8. Composant accumulateur d'énergie selon l'une des revendications 1 à 7, dans lequel l'interface de transport (36) présente l'une desdites au moins une unité de contact (12, 14) en utilisant des pointes de contact à ressort (49, 51, 53), et/ou
l'interface de transport (36) de l'une desdites au moins une unité de contact (12, 14) est réalisée au moyen de de contact coaxiaux (51, 53) de forme annulaire, et/ou
l'interface de transport (36) de ladite au moins une unité de contact (12, 14) comprend des barrettes isolantes entre des contacts individuels (49, 51, 53).

9. Composant accumulateur d'énergie selon l'une des revendications 1 à 8, dans lequel l'interface de communication (34) est une interface de communication sans fil, comme par exemple une interface de communication RFID et/ou le composant accumulateur d'énergie comprend une mémoire (12) au moins partiellement réinscriptible, et/ou le composant accumulateur d'énergie (10) comprend au moins un élément partiel (41) d'un système de sécurité antivol, et/ou
le composant accumulateur d'énergie comprend au moins une première et une seconde unité de contact (12, 14), et la première unité de contact (12) est réalisée sous la forme d'un élément mâle et la seconde unité de contact (14) est réalisée sous la forme d'un élément femelle, et/ou
le composant accumulateur d'énergie (10) comprend une unité d'identification (30) qui caractérise de façon univoque le composant accumulateur d'énergie (10), et/ou
une association du composant accumulateur d'énergie (10) à un groupe d'utilisateurs est déposée dans une mémoire (32) du composant accumulateur d'énergie (10), et/ou
le composant accumulateur d'énergie (10) comprend un boîtier (40, 42, 44) qui a sensiblement la forme d'un cylindre, ledit composant accumulateur d'énergie (10) comprenant une première et une seconde unité de contact (12, 14), qui forment respectivement une surface de base (40) et une surface de couverture (42) du cylindre.

10. Bloc accumulateur d'énergie (104) pour un réseau d'alimentation (90) pour de l'énergie électrique à titre de support de réseau, dans lequel le bloc accumulateur d'énergie (104) comprend plusieurs composants accumulateurs d'énergie (10) selon l'une des revendications 1 à 9, qui sont branchés en parallèle et/ou en série les uns par rapport aux autres.
